# EUROPEAN PATENT APPLICATION

(11) **EP 4 066 932 A1**
(43) Date of publication of application: **05.10.2022**
(21) Application number: 21166311.7
(22) Date of filing: 31.03.2021
(51) Int. Cl.: B01J 13/02, B01J 13/04, G03G 9/087, B82Y 30/00, C02F 1/00, G03G 9/093, C09D 11/00, C02F 1/48, B03C 5/00

(54) **POLYMER COATED PARTICLES**

(71) Applicant: BASF SE, 67056 Ludwigshafen am Rhein (DE)
(72) Inventor: ROHDE, Wolfgang, 67056 Ludwigshafen (DE); ETTMUELLER, Dieter, 67056 Ludwigshafen (DE); JOHN, Petra, 67056 Ludwigshafen (DE); GARCIA CASTRO, Ivette, 67056 Ludwigshafen (DE); FAUL, Dieter, 67056 Ludwigshafen (DE); KUHN, Oliver, 67056 Ludwigshafen (DE)
(74) Representative: BASF IP Association

(57) **Abstract**

The present invention relates to a core-shell particle, wherein the core comprises at least one chemical element, under the provision that in the case that one chemical element is present, said chemical element is not silver, and/or a compound thereof, and the shell comprises a copolymer comprising at least one monomer derived from ethylene dicarboxylic acid and at least one monomer derived from an olefin, to the use of this core-shell particle, and to a process for separating at least one first material from a mixture comprising said at least one first material and at least one second material.

## Description

The present invention relates to a core-shell particle comprising a core and a shell, wherein the core comprises at least one chemical element and/or at least one compound thereof, and wherein the shell comprises at least one copolymer of formula (I). Furthermore, the present invention relates to a process of preparation of a core-shell particle and uses thereof.

### Background of the Invention

Core-shell particles comprising a core comprising a metal or a compound thereof, i.e., a metal compound, and a shell comprising a polymer are known from the prior art.

Toners that are used in electrostatic printing processes contain fine powders of coated magnetizable particles. US 3,932,368 describes powders coated with polyolefins grafted with an unsaturated dicarboxylic acid. Such grafted polymers reach saponification numbers of 12 corresponding to about 1.1 % by weight of maleic anhydride in the graft polymer.

JP 2009/30111 discloses a silver fine particle colloidal dispersion liquid in which silver fine particles are dispersed in a solvent, and more particularly, it discloses a silver fine particle colloidal in which the surface of silver fine particles is protected by an olefin / maleic acid copolymer.

WO 2015/110555 relates to particles of magnetite and silicon comprising polymers, and to a process for separating at least one first material from a mixture comprising this at least one first material and at least one second material using such particles. The document WO 2015/110555, however, does not describe the stability of such particles against strong mechanical stresses.

US 2010/0028195 A1 discloses a soft magnetic powder having a magnetic core and an insulating coating covering the surface of the core wherein the insulation coating contains silicon and 80 % or more of silicon contained in the insulation coating constitutes a silsesquioxane skeleton, which compulsory contains functional groups like acrylic acid groups and cyclic ethers as polymer end groups.

WO 2009/059382 A1 discloses, for example, hydrophobic modification of mineral fillers and mixed polymer systems. According to this document, hydrophobic modification is effected by reaction of the corresponding mineral particles with silanes, for example C₃-C₁₂-alkyltrialkoxy silanes. That the correspondingly hydrophobically modified particles according to WO 2009/059382 A1 are particularly stable in large amounts of solvents, optionally in the presence of surface-active substances, is not disclosed in this document.

In light of the prior art, it is thus an object of the present invention to provide core-shell particles which are hydrophobized on the surface and that have a particularly high stability, in particular toward strong mechanical stresses, solvents and/or surface-active substances. Such properties allow for a successful reuse and recycling of the core-shell particles. It is a further object of the present invention to provide corresponding core-shell particles that, for example, can be used in processes in which these particles are in contact with solvents and/or surface-active substances, preferably in high amounts, and wherein high forces act onto the particles, wherein the hydrophobic surface shows improved stability under these conditions. A high stability of the hydrophobic surface should be advantageous since such particles may be reused, preferably without any work-up between the single cycles of a process. A further object of the present invention is to provide particles having a hydrophobic surface which is compatible with surface active substances that are used in the process.

### Summary

These and other objects are solved by a core-shell particle comprising a core and a shell, wherein the core comprises at least one chemical element, and/or at least one compound thereof, i.e., a metal compound,
wherein the at least one chemical element is selected from a metal and a semimetal; and wherein the shell comprises at least one copolymer of formula (I) 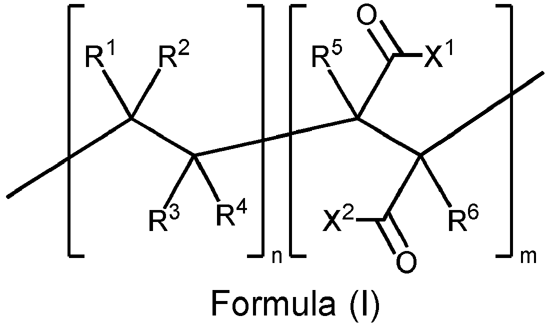 wherein R¹, R², R³, R⁴, R⁵, and R⁶ are each independently hydrogen, or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl,
wherein the alkyl-substituted 5- to 14-membered aryl or heteroaryl are substituted with at least one substituent A each independently selected from the group consisting of a C₁-C₂₀-alkyl and a C₁-C₁₀-heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups, and
wherein X¹ and X² are each independently OM, wherein M is hydrogen or an ion selected from the group consisting of NH₄⁺, Li⁺, Na⁺, K⁺, and Rb⁺ or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl, and/or NHM, wherein M is hydrogen, or an ion selected from the group consisting of Li⁺, Na⁺, K⁺, and Rb⁺, or a radical selected from the group consisting of linear or branched, substituted or unsubstituted C₁-C₃₈-alkyl, linear or branched, substituted or unsubstituted C₂-C₃₈-alkenyl, linear or branched substituted or unsubstituted C₂-C₃₈-alkinyl, and unsubstituted or alkyl-substituted 5-to 14-membered aryl or heteroaryl, and/or
any two X¹ and X² together are linked via an oxygen atom to form a succinic anhydride ring, or via an NH to form a succinimide ring, or via an NR7 to form an N-substituted succinimide ring, wherein R⁷ is selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl; and
wherein n and m are each independently integers in the range of from about 1 to about 1000, provided that the core does not consist of pure metallic silver.

### Detailed description

The present invention relates to a core-shell particle comprising a core and a shell,
wherein the core comprises at least one chemical element, and/or at least one compound thereof, i.e., a metal compound,
wherein the at least one chemical element is selected from a metal and a semimetal; and wherein the shell comprises at least one copolymer of formula (I) 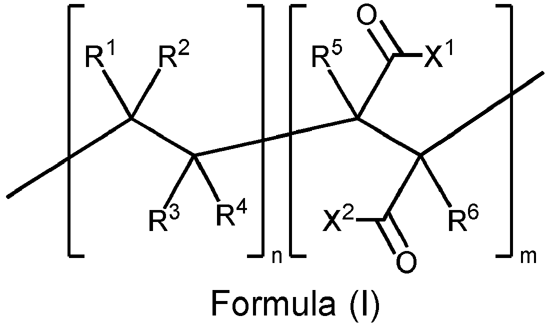 wherein R¹, R², R³, R⁴, R⁵, and R⁶ are each independently hydrogen, or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl,
wherein the alkyl-substituted 5- to 14-membered aryl or heteroaryl are substituted with at least one substituent A each independently selected from the group consisting of a C₁-C₂₀-alkyl and a C₁-C₁₀-heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups, and
wherein X¹ and X² are each independently OM, wherein M is hydrogen or an ion selected from the group consisting of NH₄⁺, Li⁺, Na⁺, K⁺, and Rb⁺ or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl, and/or NHM, wherein M is hydrogen, or an ion selected from the group consisting of Li⁺, Na⁺, K⁺, and Rb⁺, or a radical selected from the group consisting of linear or branched, substituted or unsubstituted C₁-C₃₈-alkyl, linear or branched, substituted or unsubstituted C₂-C₃₈-alkenyl, linear or branched substituted or unsubstituted C₂-C₃₈-alkinyl, and unsubstituted or alkyl-substituted 5-to 14-membered aryl or heteroaryl, and/or
any two X¹ and X² together are linked via an oxygen atom to form a succinic anhydride ring, or via an NH to form a succinimide ring, or via an NR7 to form an N-substituted succinimide ring, wherein R⁷ is selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl; and
wherein n and m are each independently integers in the range of from about 1 to about 1000, provided that the core does not consist of pure metallic silver.

The present invention further relates to a process for the preparation of a core shell particle according to the present invention by coating at least one core with at least one polymer of the general formula (I) as mentioned above.

The present invention further relates to the use of a core-shell particle according to the present invention in an electrostatic printing, electrophotographic development, agglomeration-deagglomeration processes, particularly chemical, physical or biological test methods, separation processes, decontamination processes, water purification, recycling of waste materials, such as electronic wastes, waste battery materials, tailings from ore processing or slags.

The present invention further relates to a process for separating at least one first material from a mixture comprising said at least one first material and at least one second material, wherein the process comprises the following steps:
(A) contacting of the mixture comprising the at least one first material and the at least one second material with at least one surface-modifying substance, optionally in the presence of at least one dispersant,
(B) if appropriate, addition of at least one dispersant to the mixture obtained in step (A),
(C) treatment of the dispersion from step (A) or (B) with at least one core-shell particle according the present invention, wherein the at least one first material to which the at least one surface-modifying substance is attached and the at least one core-shell particle form an agglomerate,
(D) separation of the agglomerate formed in step (C) from the mixture by the action of a gravity or magnetic field, i.e. by dense media separation, flotation or magnetic separation,
(E) optionally cleavage of the addition product which has been separated off in step (D) to obtain the at least one first material and the at least one core-shell particle separately.

In a preferred embodiment of the present invention, the separation process comprises the following steps:
(A) contacting of the mixture comprising the at least one first material and the at least one second material with at least one surface-modifying substance, optionally in the presence of at least one dispersant,
(B) if appropriate, addition of at least one dispersant to the mixture obtained in step (A),
(C) treatment of the dispersion from step (A) or (B) with at least one core-shell particle according the present invention, wherein at least one metal and/or at least one compound thereof, or the mixture of at least one metal and/or at least one compound thereof and at least one semimetal and/or at least one compound thereof is magnetic, and the at least one first material to which the at least one surface-modifying substance is attached and the at least one core-shell particle form an agglomerate,
(D) separation of the agglomerate formed in step (C) from the mixture by application of a magnetic field, and
(E) cleavage of the addition product which has been separated off in step (D) to obtain the at least one first material and the at least one core-shell particle separately.

The present invention further relates to a process for separating at least one first material from a mixture comprising said at least one first material and at least one second material, wherein the process comprises the following steps:
(A) contacting of the mixture comprising the at least one first material and the at least one second material with at least one surface-modifying substance, optionally in the presence of at least one dispersant,
(B) if appropriate, addition of at least one dispersant to the mixture obtained in step (A),
(C) treatment of the dispersion from step (A) or (B) with at least one core-shell particle according the present invention, wherein at least one metal and/or at least one compound thereof, or the mixture of at least one metal and/or at least one compound thereof and at least one semimetal and/or at least one compound thereof is magnetic, and the at least one first material to which the at least one surface-modifying substance is attached and the at least one core-shell particle form an agglomerate, and
(D) separation of the agglomerate formed in step (C) from the mixture by application of a magnetic field.

### Core

Core-shell particles according to the present invention comprise a core comprising at least one chemical element and/or at least one compound thereof, wherein the at least one chemical element is selected from a metal and a semimetal, or a mixture of at least one metal and at least one semimetal.

In the sense of the present invention, it is understood that the core does not consist of elemental silver.

Despite that, the core-shell particles according to the present invention may comprise any metal, or a compound thereof, or a mixture of any metal or a compound thereof and any semimetal or a compound thereof.

In a preferred embodiment of the invention, the metals are selected from the group consisting of the metals of the main groups and transition metal groups of the Periodic Table of the Elements, in particular the transition metal groups of the Periodic Table of the Elements. As used herein, the term "transition metal group" includes lanthanides and actinides.

Examples of suitable metals of the main groups of the Periodic Table of the Elements are the alkali metals, for example Li, Na, K, Rb, or Cs; alkaline earth metals, for example Be, Mg, Ca, Ba, or Sr; the third main group of the Periodic Table of the Elements, for example Al, Ga, In, or Tl; the fourth main group of the Periodic Table of the Elements, for example Sn or Pb; or the fifth main group of the Periodic Table of the Elements, for example Sb or Bi.

Examples of suitable metals of the transition metal groups of the Periodic Table of the Elements are Sc, Y, the lanthanides, the actinides, Ti, Zr, Hf, Mn, Re, Fe, Ru, Os, Co, Rh, Ir, Ni, Pd, Pt, Cu, Ag, Au, Zn and Cd.

In another embodiment of the invention, the semimetals are selected from the group consisting of B, Si, Ge, As, Sb, Te, C, Al, Se, Po, and At. In a preferred embodiment, the semimetals are selected from the group consisting of B, Si, and C.

Preferred compounds of metals are selected from the group consisting of metal alloys, metal oxides, metal sulfides, metal hydroxides, metal hydrogensulfates, metal sulfates, metal hydrogencarbonates, metal carbonates, metal phosphates, metal monohydrogen phosphates, metal dihydrogenphosphates, metal halogenides, metal borides, metal nitrides, metal carbides, metal silicides, another metal salt, and mixtures thereof.

Particularly preferred examples of metal oxides which are particularly suitable for the purposes of the invention are the oxides of the metals of the main groups and transition metal groups of the Periodic Table of the Elements, in particular the transition metal groups of the Periodic Table of the Elements.

In a preferred embodiment, the metal oxide used according to the invention is an oxide of the metals selected from the group consisting of Li, Na, K, Rb, Cs, Be, Mg, Ca, Ba, Sr, Al, Ga, In, Tl, Sn, Pb, Sb, Bi, Sc, Y, the lanthanides, the actinides, Ti, Zr, Hf, Mn, Re, Fe, Ru, Os, Co, Rh, Ir, Ni, Pd, Pt, Cu, Ag, Au, Zn, Cd and mixtures thereof. In one embodiment, the metal oxide is preferably selected from the group consisting of Mn, Fe, Co, Ni, Cu and combinations thereof. Furthermore, mixed oxides of these metals, in particular Mn, Fe, Co, Ni or Cu, with at least one alkaline earth metal, for example Mg, Ca, Sr and/or Ba, are also suitable for the purposes of the invention.

The present invention, preferably provides a core-shell particle, wherein the core comprises at least one metal compound, which is a metal oxide, wherein the metal of the oxide is selected from the group consisting of Mn, Fe, Co, Ni, Cu, combinations thereof and mixed oxides of these metals with at least one alkaline earth metal, for example Mg, Ca, Sr and/or Ba.

According to a preferred embodiment of the present invention, the core-shell particle comprises a magnetic core. In other words, the core comprises at least one metal or compound thereof which is magnetic, preferably ferromagnetic or ferromagnetic.

Particularly preferred magnetic materials are metal oxides like iron oxides, for example Fe₂O₃, magnetic iron oxides, for example magnetite, maghemite, hematite, cubic ferrites of the general formula (IV)

Z²⁺ₓFe²⁺₁₋ₓFe³⁺₂O₄ (IV)

where
- Z: is selected from among Co, Ni, Mn, Zn, Cu, Mg, Cd, Ba, Sr and mixtures thereof, and
- x: is ≤ 1,
hexagonal ferrites, for example calcium, barium or strontium ferrite ZFe₆O₁₉ where Z = Ca, Sr, Ba, and combinations thereof.

In a preferred embodiment, the metal oxide used according to the invention is a magnetic iron oxide selected from the abovementioned group. In a very particularly preferred embodiment, the at least one metal oxide used according to the invention is magnetite. Magnetite has the formula Fe₃O₄, in particular Fe^{II}Fe^{III}₂O₄, and is known to those skilled in the art. Magnetite can be prepared by known processes, is commercially available and occurring in nature. Naturally occurring magnetite may further comprise magnesium, calcium, silica, potassium and/or sodium. Magnetite is commercially available, e.g., as magnetic pigment 345 (BASF SE) or ElectrOxide from Höganäs.

The present invention therefore preferably relates to the core-shell particle according to the present invention, wherein the at least one compound of at least one metal is selected from the group consisting of iron oxides, magnetic iron oxides and mixtures thereof. Magnetite is particularly preferred.

The metal oxide particles used according to the invention can optionally comprise dopants, for example further metals in oxidic or elemental form.

According to another preferred embodiment of the core-shell particle according to the present invention, the core comprises a mixture of at least one metal or a compound thereof and at least one semimetal or a compound thereof, particularly preferably an alloy, more preferred a magnetic alloy. A preferred semimetal is silicon. Another preferred semimetal is carbon. A preferred embodiment of the mixture comprising at least one metal or a compound thereof and at least one semimetal or a compound thereof is a magnetic iron-silicon-alloy. Another preferred embodiment of the mixture comprising at least one metal or a compound thereof and at least one semimetal or a compound thereof is a magnetic iron-carbon-alloy, such as steel.

According to a particularly preferred embodiment of the core-shell particle according to the present invention, the core is magnetic and comprises, preferably consists of, at least one material selected from the group of magnetic iron oxides, for example magnetite, maghemite, hematite, at least one alloy comprising a mixture of at least one metal and at least one semimetal, in particular a magnetic silicon-iron-alloy, and mixtures thereof. In the sense of the present invention, magnetic means ferromagnetic or ferromagnetic, preferably ferromagnetic.

According to a further preferred embodiment, the core of the core-shell particle according to the present invention itself comprises a first coating of at least one inorganic material, for example selected from the group consisting of oxides of semimetals or metals, in particular metals of the transitions metal groups of the Periodic Table of the Elements. According to a preferred embodiment, the first coating comprises, in particular consists of, oxides of semimetals or metals selected from the group consisting of Zr, Al, Ti, Si and mixtures thereof.

According a preferred embodiment of this part of the present invention, the core comprises, in particular consists of, the materials that have been mentioned above, and the first coating comprises, in particular consist of, ZrO₂, SiO₂, Al₂O₃ and/or TiO₂. These cores comprising a first coating of at least one inorganic material further comprise a shell of the polymer of general formula (I) as mentioned above to obtain the core-shell particle according to the present invention.

The core-shell particles according to the present invention comprise cores that in general may have any shape, for example spherical, cylindrical, acicular or cuboidal.

Further, the core-shell particles according to the present invention comprise cores that in general may have a size, preferably a diameter, of about 50 nm to about 500 µm, preferably from about 200 nm to about 100 µm, particularly preferably from about 500 nm to about 50 µm, D₉₀-values in each case. The definition of "D₉₀" is known to the skilled artisan and means that 90 % of the particles have a size that is lower than the value mentioned. These values can be acquired according to TEM (Transmission Electron Microscopy) or light diffraction methods, for example using a Malvern Mastersizer (such as a Mastersizer 2000 with software version 5.12G, wherein the sample is dispersed in an aqueous solution of Na₄P₂O₇).

The present invention therefore preferably relates to core-shell particle according to the present invention, wherein the core has an average diameter D₉₀ of about 50 nm to about 500 µm, preferably from about 200 nm to about 100 µm, particularly preferably from about 500 nm to about 50 µm.

### Shell

Further, the core-shell particle according to the present invention comprises a shell having an average thickness of about 0.1 nm to about 1000 nm, preferably about 0.5 nm to about 200 nm, particularly preferably about 0.5 nm to about 20 nm, even more preferred about 1 nm to about 20 nm. These values can be acquired according to transmission electron microscopy (TEM).

The core-shell particle according to the present invention comprises a shell comprising at least one polymer of the general formula (I) 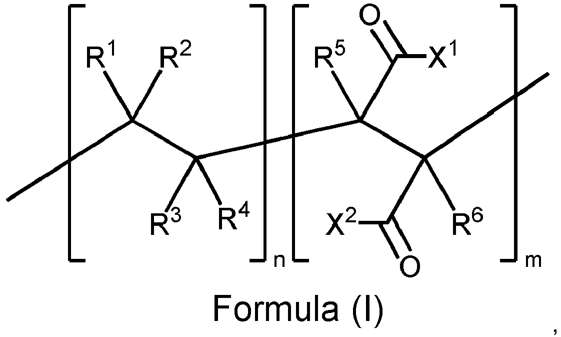 wherein R¹, R², R³, R⁴, R⁵, and R⁶ are each independently hydrogen, or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl,
wherein the alkyl-substituted 5- to 14-membered aryl or heteroaryl are substituted with at least one substituent A each independently selected from the group consisting of a C₁-C₂₀-alkyl and a C₁-C₁₀-heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups, and
wherein X¹ and X² are each independently OM, wherein M is hydrogen or an ion selected from the group consisting of NH₄⁺, Li⁺, Na⁺, K⁺, and Rb⁺ or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl, and/or NHM, wherein M is hydrogen, or an ion selected from the group consisting of Li⁺, Na⁺, K⁺, and Rb⁺, or a radical selected from the group consisting of linear or branched, substituted or unsubstituted C₁-C₃₈-alkyl, linear or branched, substituted or unsubstituted C₂-C₃₈-alkenyl, linear or branched substituted or unsubstituted C₂-C₃₈-alkinyl, and unsubstituted or alkyl-substituted 5-to 14-membered aryl or heteroaryl, and/or
any two X¹ and X² together are linked via an oxygen atom to form a succinic anhydride ring, or via an NH to form a succinimide ring, or via an NR⁷ to form an N-substituted succinimide ring, wherein R⁷ is selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl; and
wherein n and m are each independently integers in the range of from about 1 to about 1000.

According to one embodiment of the present invention, the core-shell particle comprises a shell comprising a polymer according to general formula (I), wherein R⁵ and R⁶ are each independently of another hydrogen, or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5-membered to 14-membered aryl, wherein the alkyl-substituted 5-membered to 14-membered aryl are substituted with a substituent A selected from the group consisting of a C₁-C₂₀-alkyl and a C₁-C₁₀-heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups.

According to one embodiment of the present invention, the core-shell particle comprises a shell comprising a polymer according to general formula (I), wherein R⁵ and R⁶ are each independently of another hydrogen, or a radical selected from the group consisting of unsubstituted or substituted, linear or branched C₁-C₃₈-alkyl.

In a preferred embodiment of the present invention, the core-shell particle comprises a shell comprising a polymer according to general formula (I), wherein R⁵ and R⁶ are each independently of another hydrogen, or a radical selected from the group consisting of unsubstituted or substituted linear or branched C₁-C₆-alkyl, preferably C₁-C₄-alkyl, further preferably C₁-C₃-alkyl. Particularly preferred embodiments of R⁵ and R⁶ concerning unsubstituted, linear or branched C₁-C₆-alkyl are methyl, ethyl, n-propyl, iso-propyl, n-butyl, iso-butyl, tert.-butyl, n-pentyl, iso-pentyl, tert.-pentyl, n-hexyl, iso-hexyl, and tert.-hexyl.

In another preferred embodiment of the present invention, the core-shell particle comprises a shell comprising a polymer according to general formula (I), wherein R⁵ and R⁶ are each independently of another hydrogen or methyl. In another preferred embodiment, both R⁵ and R⁶ are either hydrogen or methyl. In another preferred embodiment, both R⁵ and R⁶ are hydrogen.

In another embodiment of the present invention, the core-shell particle comprises a shell comprising a polymer according to general formula (I), wherein R⁵ and R⁶ are each independently of another hydrogen, or a radical selected from the group consisting of substituted, linear or branched C₁-C₃₈-alkyl. In a preferred embodiment of the present invention, the core-shell particle comprises a shell comprising a polymer according to general formula (I), wherein R⁵ and R⁶ are each independently of another hydrogen, or a radical selected from the group consisting of substituted linear or branched C₁-C₆-alkyl, preferably C₁-C₄-alkyl, further preferably C₁-C₃-alkyl.

In the sense of the present invention, the term "substituted" in conjunction with a radical, e.g., substituted alkyl, refers to a radical which is substituted with 1, 2, 3, 4, or 5 substituents. Preferred substituents are F, CI, Br, I, OH, SH, -COOH, -NH₂-CN, -C(O)NH₂ (amido), or aldehyde (=O).

Preferred embodiments of R⁵ and R⁶ concerning substituted, linear or branched C₁-C₆-alkyl, or C₁-C₄-alkyl, or C₁-C₃-alkyl are -CH₂OH, -CH₂-SH, -CH₂NH₂, -CN, -CH₂-CH₂-OH, -CH₂-CH₂-NH₂, -CH₂-CH₂-SH, -CH₂-CH₂-SH -CH₂-CH₂-CN, -CH₂-CH=O, -CH₂-CH₂-CH₂-OH, -CH₂-CH₂-CH₂-SH, -CH₂-CH₂-CH₂-NH₂, CH₂-CH₂-CH₂-CN and -CH₂-CH₂-CH=O.

According to another embodiment of the present invention, the core-shell particle comprises a shell comprising a polymer according to general formula (I), wherein R⁵ and R⁶ are each independently of another hydrogen, or a radical selected from the group consisting of unsubstituted or substituted, linear or branched C₂-C₃₈-alkenyl.

In a preferred embodiment of the present invention, the core-shell particle comprises a shell comprising a polymer according to general formula (I), wherein R⁵ and R⁶ are each independently of another hydrogen, or a radical selected from the group consisting of unsubstituted or substituted linear or branched C₂-C₆-alkenyl. Particularly preferred embodiments of R⁵ and R⁶ concerning unsubstituted, linear or branched C₂-C₆-alkenyl are ethenyl, propenyl, 1-butenyl, 2-butenyl, 3-butenyl, 1-pentenyl, 2-pentenyl, 4-pentenyl, iso-pentenyl, 1-hexenyl, 5-hexenyl, and iso-hexenyl.

In another embodiment of the present invention, the core-shell particle comprises a shell comprising a polymer according to general formula (I), wherein R⁵ and R⁶ are each independently of another hydrogen, or a radical selected from the group consisting of substituted, linear or branched C₁-C₃₈-alkenyl. In a preferred embodiment of the present invention, the core-shell particle comprises a shell comprising a polymer according to general formula (I), wherein R⁵ and R⁶ are each independently of another hydrogen, or a radical selected from the group consisting of substituted, linear or branched C₁-C₆-alkenyl.

Preferred embodiments of R⁵ and R⁶ concerning substituted, linear or branched C₁-C₆-alkenyl are -CH₂=CH₂-CH₂-OH, -CH₂=CH₂-CH₂-SH, -CH₂=CH₂-CH₂-NH₂, -CH₂=CH₂-CH₂-CN, and -CH₂=CH₂-CH=O.

According to another embodiment of the present invention, the core-shell particle comprises a shell comprising a polymer according to general formula (I), wherein R⁵ and R⁶ are each independently of another hydrogen, or a radical selected from the group consisting of unsubstituted or substituted, linear or branched C₂-C₃₈-alkinyl.

In a preferred embodiment of the present invention, the core-shell particle comprises a shell comprising a polymer according to general formula (I), wherein R⁵ and R⁶ are each independently of another hydrogen, or a radical selected from the group consisting of unsubstituted or substituted linear or branched C₂-C₆-alkinyl. Particularly preferred embodiments of R⁵ and R⁶ concerning unsubstituted, linear or branched C₂-C₆-alkinyl are ethinyl, propinyl, 1-butinyl, 2-butinyl, 3-butinyl, 1-pentinyl, 2-pentinyl, 3-pentinyl, 4-pentinyl, iso-pentinyl, 1-hexinyl, 5-hexinyl, and iso-hexinyl.

In another embodiment of the present invention, the core-shell particle comprises a shell comprising a polymer according to general formula (I), wherein R⁵ and R⁶ are each independently of another hydrogen, or a radical selected from the group consisting of substituted, linear or branched C₁-C₃₈-alkinyl. In a preferred embodiment of the present invention, the core-shell particle comprises a shell comprising a polymer according to general formula (I), wherein R⁵ and R⁶ are each independently of another hydrogen, or a radical selected from the group consisting of substituted, linear or branched C₁-C₆-alkinyl.

Preferred embodiments of R⁵ and R⁶ concerning substituted, linear or branched C₁-C₆-alkinyl are -CH₂≡CH₂-CH₂-OH, -CH₂=CH₂-CH₂-SH, -CH₂=CH₂-CH₂-NH₂, -CH₂≡CH₂-CN, -CH₂≡CH₂-CH₂-CN and -CH₂≡CH₂-CH=O.

In another embodiment of the present invention, the core-shell particle comprises a shell comprising a polymer according to general formula (I), wherein R⁵ and R⁶ are each independently of another hydrogen, or a radical selected from the group consisting of unsubstituted 5- to 14-membererd aryl. Preferred embodiments of R⁵ and R⁶ concerning unsubstituted 5- to 14-membered aryl are phenyl, biphenyl, indenyl, naphthalinyl, anthracenyl, and phenatrenyl.

In another embodiment of the present invention, the core-shell particle comprises a shell comprising a polymer according to general formula (I), wherein R⁵ and R⁶ are each independently of another hydrogen, or a radical selected from the group consisting of alkyl-substituted 5- to 14-membererd aryl, wherein the alkyl-substituted 5- to 14-membered aryl is substituted with at least one substituent A each independently selected from the group consisting of a C₁-C₂₀ alkyl and a C₁-C₁₀ heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups. Preferred embodiments regarding substituent A being a C₁-C₂₀ alkyl are methyl, ethyl, propyl, n-butyl, and linear C₈-C₁₈ alkyl, preferably linear C₁₀-C₁₆ alkyl. Preferred embodiments of R⁵ and R⁶ concerning alkyl-substituted 5- to 14-membered aryl are tolyl, o-xylyl, m-xylyl, p-xylyl, xylidyl, benzyl, phenyloctane, phenyldecane, phenylduodecan, and phenylcetyl. Preferred embodiments regarding substituent A being a C₁-C₁₀ heteroalkyl are methoxy, ethoxy, propoxy, haloalkyl, CH₂OH, -CH₂-SH, -CH₂NH₂, -CN, -CH₂-CH₂-OH, -CH₂-CH₂-NH₂, -CH₂-CH₂-SH, -CH₂-CH₂-SH, -CH₂-CH₂-CN, -CH₂-CH=O, -CH₂-CH₂-CH₂-OH, -CH₂-CH₂-CH₂-SH , -CH₂-CH₂-CH₂-NH₂, CH₂-CH₂-CH₂-CN and -CH₂-CH₂-CH=O.

In another embodiment of the present invention, the core-shell particle comprises a shell comprising a polymer according to general formula (I), wherein R⁵ and R⁶ are each independently of another hydrogen, or a radical selected from the group consisting of alkyl-substituted 5- to 14-membererd aryl, wherein the alkyl-substituted 5- to 14-membered aryl is substituted with at least one substituent A each independently selected from the group consisting of a C₁-C₂₀ alkyl and a C₁-C₁₀-heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups. Preferred embodiments regarding substituent A being a C₁-C₂₀ alkyl are methyl, ethyl, propyl, n-butyl, and linear C₈-C₁₈ alkyl, preferably linear C₁₀-C₁₆ alkyl. Preferred embodiments of R⁵ and R⁶ concerning alkyl-substituted 5- to 14-membered aryl are tolyl, o-xylyl, m-xylyl, p-xylyl, xylidyl, benzyl, phenyloctane, phenyldecane, phenylduodecan, and phenylcetyl. Preferred embodiments regarding substituent A being a C₁-C₁₀ heteroalkyl are methoxy, ethoxy, propoxy, haloalkyl, CH₂OH, -CH₂-SH, -CH₂NH₂, -CN, -CH₂-CH₂-OH, -CH₂-CH₂-NH₂, -CH₂-CH₂-SH, -CH₂-CH₂-SH, -CH₂-CH₂-CN, -CH₂-CH=O, -CH₂-CH₂-CH₂-OH, -CH₂-CH₂-CH₂-SH, -CH₂-CH₂-CH₂-NH₂, -CH₂-CH₂-CH₂-CN and -CH₂-CH₂-CH=O.

In another embodiment of the present invention, the core-shell particle comprises a shell comprising a polymer according to general formula (I), wherein R⁵ and R⁶ are each independently of another hydrogen, or a radical selected from the group consisting of unsubstituted 5- to 14-membererd heteroaryl. Preferred embodiments of R⁵ and R⁶ concerning unsubstituted 5- to 14-membered heteroaryl are furane, thiophene, pyrrole, pyrazole, imidazole, triazole, oxazole, thiazole, pyridine, pyrazine, oyrimidine, pyridazine, triazine, indole, benzofurane, benzimidazole, chinoline, chinazoline, and purine.

In another embodiment of the present invention, the core-shell particle comprises a shell comprising a polymer according to general formula (I), wherein R⁵ and R⁶ are each independently of another hydrogen, or a radical selected from the group consisting of alkyl-substituted 5- to 14-membererd heteroaryl, wherein the alkyl-substituted 5- to 14-membered heteroaryl is substituted with at least one substituent A each independently selected from the group consisting of a C₁-C₂₀ alkyl and a C₁-C₁₀ heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups. Preferred embodiments regarding substituent A being a C₁-C₂₀ alkyl are methyl, ethyl, propyl, n-butyl, and linear C₈-C₁₈ alkyl, preferably linear C₁₀-C₁₆ alkyl. Preferred embodiments of R⁵ and R⁶ concerning alkyl-substituted 5- to 14-membered aryl are tolyl, o-xylyl, m-xylyl, p-xylyl, xylidyl, benzyl, phenyloctane, phenyldecane, phenylduodecan, and phenylcetyl. Preferred embodiments regarding substituent A being a C₁-C₁₀ heteroalkyl are methoxy, ethoxy, propoxy, haloalkyl, CH₂OH, -CH=O, -CH₂-SH, -CH₂NH₂, -CN, -CH₂-CH₂-OH, -CH₂-CH₂-NH₂, -CH₂-CH₂-SH, -CH₂-CH₂-SH, -CH₂-CH₂-CN, -CH₂-CH=O, -CH₂-CH₂-CH₂-OH, -CH₂-CH₂-CH₂-SH, -CH₂-CH₂-CH₂-NH₂, CH₂-CH₂-CH₂-CN and -CH₂-CH₂-CH=O.

In another embodiment of the present invention, the core-shell particle comprises a shell comprising a polymer according to general formula (I), wherein X¹ and X² are O-M, wherein M is hydrogen or an ion selected from the group consisting of NH₄⁺, Li⁺, Na⁺, K⁺, and Rb⁺. In other words, X¹ and X² may each independently of another be a carboxylic acid, wherein M is hydrogen, or the corresponding carboxylate anion, wherein M is a positively charged ion with single charge, such as NH₄⁺, Li⁺, Na⁺, K⁺, and Rb. It is understood that the selection of M is strongly dependent on the pH value, i.e., at acidic pH values, M is hydrogen; at basic pH values, M is a positively charged ion. Furthermore, one positively charged ion may balance the negative charge of several carboxylate ions. For example Ca²⁺ may be present. In such case, M is ½ Ca²⁺.

In one embodiment of the present invention, the core-shell particle comprises a shell comprising a polymer according to general formula (I), wherein M is selected from the group of hydrogen, alkaline metal ions and earth alkaline metal ions. Such ions may be selected from the group consisting of Li⁺, Na⁺, K⁺, ½Be²⁺, ½Mg²⁺, ½Ca²⁺, ½Sr²⁺, and ½Ba²⁺. It is understood that M may not be identical throughout the polymer.

In a preferred embodiment of the present invention, the core-shell particle comprises a shell comprising a polymer according to general formula (I), wherein M is selected from the group consisting of hydrogen, Na⁺, and K⁺.

In another embodiment regarding OM, M is selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl,
wherein the alkyl-substituted 5- to 14-membered aryl or heteroaryl are substituted with at least one substituent A each independently selected from the group consisting of a C₁-C₂₀-alkyl and a C₁-C₁₀-heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups. In other words, OM forms an ester.

According to one embodiment regarding OM, M is selected from the group the group consisting of unsubstituted or substituted, linear or branched C₁-C₃₈-alkyl.

According to another embodiment regarding OM, M is a radical selected from the group consisting of unsubstituted or substituted linear or branched C₁-C₆-alkyl. Particularly preferred embodiments of M concerning unsubstituted, linear or branched C₁-C₆-alkyl are methyl, ethyl, n-propyl, iso-propyl, n-butyl, iso-butyl, tert.-butyl, n-pentyl, iso-pentyl, tert.-pentyl, n-hexyl, iso-hexyl, and tert.-hexyl. According to another embodiment regarding OM, M is methyl.

According to another embodiment regarding OM, M is a radical selected from the group consisting of substituted, linear or branched C₁-C₃₈-alkyl. According to another embodiment regarding OM, M is a radical selected from the group consisting of substituted linear or branched C₁-C₆-alkyl, preferably C₁-C₄-alkyl, further preferably C₁-C₃-alkyl.

According to another embodiment regarding OM, M is a radical selected from the group consisting of -CH₂OH, -CH₂-SH, -CH₂NH₂, -CN, -CH₂-CH₂-OH, -CH₂-CH₂-NH₂, -CH₂-CH₂-SH, -CH₂-CH₂-SH-CH₂-CH₂-CN, -CH₂-CH=O, -CH₂-CH₂-CH₂-OH, -CH₂-CH₂-CH₂-SH, -CH₂-CH₂-CH₂-NH₂, CH₂-CH₂-CH₂-CN and -CH₂-CH₂-CH=O.

According to another embodiment regarding OM, M is a radical selected from the group consisting of unsubstituted or substituted, linear or branched C₂-C₃₈-alkenyl.

According to another embodiment regarding OM, M is a radical selected from the group consisting of unsubstituted or substituted linear or branched C₂-C₆-alkenyl. According to another embodiment regarding OM, M is a radical selected from the group consisting of ethenyl, propenyl, 1-butenyl, 2-butenyl, 3-butenyl, 1-pentenyl, 2-pentenyl, 4-pentenyle, iso-pentenyl, 1-hexenyl, 5-hexenyl, and iso-hexenyl.

According to another embodiment regarding OM, M is a radical selected from the group consisting of substituted, linear or branched C₂-C₃₈-alkenyl. According to another embodiment regarding OM, M is a radical selected from the group consisting of substituted, linear or branched C₂-C₆-alkenyl. According to a preferred embodiment regarding OM being a C₂-C₆ alkenyl, M is a radical selected from the group consisting of -CH₂=CH₂-CH₂-OH, -CH₂=CH₂-CH₂-SH, -CH₂=CH₂-CH₂-NH₂, -CH₂=CH₂-CH₂-CN, and -CH₂=CH₂-CH=O.

According to another embodiment regarding OM, M is a radical selected from the group consisting of unsubstituted or substituted, linear or branched C₂-C₃₈-alkinyl.

According to another embodiment regarding OM, M is a radical selected from the group consisting of unsubstituted or substituted linear or branched C₂-C₆-alkinyl. According to a preferred embodiment of OM concerning unsubstituted, linear or branched C₂-C₆-alkinyl are ethinyl, propinyl, 1-butinyl, 2-butinyl, 3-butinyl, 1-pentinyl, 2-pentinyl, 3-pentinyl, 4-pentinyl, iso-pentinyl, 1-hexinyl, 5-hexinyl, and iso-hexinyl.

According to another embodiment regarding OM, M is a radical selected from the group consisting of substituted, linear or branched C₁-C₃₈-alkinyl. According to another embodiment regarding OM, M is a radical selected from the group consisting of substituted, linear or branched C₁-C₆-alkinyl.

Preferred embodiments of M concerning substituted, linear or branched C₁-C₆-alkinyl are -CH₂≡ CH₂-CH₂-OH, -CH₂≡CH₂-CH₂-SH, -CH₂≡CH₂-CH₂-NH₂, -CH₂≡CH₂-CN, -CH₂≡CH₂-CH₂-CN and -CH₂≡CH₂-CH=O.

According to another embodiment regarding OM, M is a radical selected from the group consisting of unsubstituted 5- to 14-membererd aryl. Preferred embodiments of M concerning unsubstituted 5- to 14-membered aryl are phenyl, biphenyl, indenyl, naphthalinyl, anthracenyl, and phenatrenyl.

According to another embodiment regarding OM, M is a radical selected from the group consisting of alkyl-substituted 5- to 14-membererd aryl, wherein the alkyl-substituted 5- to 14-membered aryl is substituted with at least one substituent A each independently selected from the group consisting of a C₁-C₂₀ alkyl and a C₁-C₁₀ heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups. Preferred embodiments regarding substituent A being a C₁-C₂₀ alkyl are methyl, ethyl, propyl, n-butyl, and linear C₈-C₁₈ alkyl, preferably linear C₁₀-C₁₆ alkyl. Preferred embodiments of m concerning alkyl-substituted 5- to 14-membered aryl are tolyl, o-xylyl, m-xylyl, p-xylyl, xylidyl, benzyl, phenyloctane, phenyldecane, phenylduodecan, and phenylcetyl. Preferred embodiments regarding substituent A being a C₁-C₁₀ heteroalkyl are methoxy, ethoxy, propoxy, haloalkyl, CH₂OH, -CH₂-SH, -CH₂NH₂, -CN, -CH₂-CH₂-OH, -CH₂-CH₂-NH₂, -CH₂-CH₂-SH, -CH₂-CH₂-SH, -CH₂-CH₂-CN, -CH₂-CH=O, -CH₂-CH₂-CH₂-OH, -CH₂-CH₂-CH₂-SH, -CH₂-CH₂-CH₂-NH₂, CH₂-CH₂-CH₂-CN and -CH₂-CH₂-CH=O.

According to another embodiment regarding OM, M is a radical selected from the group consisting of unsubstituted 5- to 14-membererd aryl. Preferred embodiments of M concerning unsubstituted 5- to 14-membered aryl are phenyl, biphenyl, indenyl, naphthalinyl, anthracenyl, and phenatrenyl.

According to another embodiment regarding OM, M is a radical selected from the group consisting of alkyl-substituted 5- to 14-membererd aryl, wherein the alkyl-substituted 5- to 14-membered aryl is substituted with at least one substituent A each independently selected from the group consisting of a C₁-C₂₀ alkyl and a C₁-C₁₀ heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups. Preferred embodiments regarding substituent A being a C₁-C₂₀ alkyl are methyl, ethyl, propyl, n-butyl, and linear C₈-C₁₈ alkyl, preferably linear C₁₀-C₁₆ alkyl. Preferred embodiments of M concerning alkyl-substituted 5- to 14-membered aryl are tolyl, o-xylyl, m-xylyl, p-xylyl, xylidyl, benzyl, phenyloctane, phenyldecane, phenylduodecan, and phenylcetyl. Preferred embodiments regarding substituent A being a C₁-C₁₀ heteroalkyl are methoxy, ethoxy, propoxy, haloalkyl, CH₂OH, -CH₂-SH, -CH₂NH₂, -CN, -CH₂-CH₂-OH, -CH₂-CH₂-NH₂, -CH₂-CH₂-SH, -CH₂-CH₂-SH, -CH₂-CH₂-CN, -CH₂-CH=O, -CH₂-CH₂-CH₂-OH, -CH₂-CH₂-CH₂-SH, -CH₂-CH₂-CH₂-NH₂, CH₂-CH₂-CH₂-CN and -CH₂-CH₂-CH=O.

According to another embodiment regarding OM, M is a radical selected from the group consisting of unsubstituted 5- to 14-membererd heteroaryl. Preferred embodiments of M concerning unsubstituted 5- to 14-membered heteroaryl are furane, thiophene, pyrrole, pyrazole, imidazole, triazole, oxazole, thiazole, pyridine, pyrazine, oyrimidine, pyridazine, triazine, indole, benzofurane, benzimidazole, chinoline, chinazoline, and purine.

According to another embodiment regarding OM, M is a radical selected from the group consisting of alkyl-substituted 5- to 14-membererd heteroaryl, wherein the alkyl-substituted 5- to 14-membered heteroaryl is substituted with at least one substituent A each independently selected from the group consisting of a C₁-C₂₀ alkyl and a C₁-C₁₀ heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups. Preferred embodiments regarding substituent A being a C₁-C₂₀ alkyl are methyl, ethyl, propyl, n-butyl, and linear C₈-C₁₈ alkyl, preferably linear C₁₀-C₁₆ alkyl. Preferred embodiments of M concerning alkyl-substituted 5- to 14-membered aryl are tolyl, o-xylyl, m-xylyl, p-xylyl, xylidyl, benzyl, phenyloctane, phenyldecane, phenylduodecan, and phenylcetyl. Preferred embodiments regarding substituent A being a C₁-C₁₀ heteroalkyl are methoxy, ethoxy, propoxy, haloalkyl, CH₂OH, -CH=O, -CH₂-SH, -CH₂NH₂, -CN, -CH₂-CH₂-OH, -CH₂-CH₂-NH₂, -CH₂-CH₂-SH, -CH₂-CH₂-SH, -CH₂-CH₂-CN, -CH₂-CH=O, -CH₂-CH₂-CH₂-OH, -CH₂-CH₂-CH₂-SH, -CH₂-CH₂-CH₂-NH₂, CH₂-CH₂-CH₂-CN and -CH₂-CH₂-CH=O.

In another embodiment of the present invention, the core-shell particle comprises a shell comprising a polymer according to general formula (I), wherein X¹ and X² are NHM, wherein M is hydrogen or a radical as defined as regards OM hereinabove.

In a preferred embodiment of the present invention, the core-shell particle comprises a shell comprising a polymer according to general formula (I), wherein X¹ and X² are NHM, wherein M is hydrogen or an ion selected from the group of Li⁺, Na⁺, K⁺, and Rb⁺. In other words, X¹ and X² may each independently of another be an amide, wherein M is hydrogen, or the corresponding metal amide. It is understood that the selection of M is strongly dependent on the pH value, i.e., at acidic pH values, M may be hydrogen; at strongly basic pH values, M may a positively charged ion. Thereby, one positively charged ion may balance the negative charge of several carboxylate ions. For example Ca²⁺ may be present. In such case, M is ½ Ca²⁺.

In another embodiment regarding NHM, M is selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl. In other words, NM forms an amide. Preferred embodiments of M regarding linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl are as defined with regard to OM above.

In another embodiment of the present invention the core-shell particle comprises a shell comprising a polymer according to general formula (I), wherein any two X¹ and X² together are linked via an oxygen atom to form a succinic anhydride ring.

In another embodiment of the present invention the core-shell particle comprises a shell comprising a polymer according to general formula (I), wherein any two X¹ and X² together are linked via a nitrogen atom, wherein the nitrogen atom is "substituted" with a hydrogen, to form a succinimide ring, i.e., an unsubstituted succinimide. In other words, any two X¹ and X² together are linked via an NH group.

In another embodiment of the present invention the core-shell particle comprises a shell comprising a polymer according to general formula (I), wherein any two X¹ and X² together are linked via a nitrogen atom, wherein the nitrogen atom is substituted with R⁷, to form an N-substituted succinimide ring, wherein R⁷ is selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl. In other words, any two X¹ and X² together are linked via a NR⁷. Preferred embodiments of R⁷ concerning linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl are the same as defined above with regard to OM.

According to one embodiment of the present invention, the core-shell particle comprises a shell comprising a polymer according to general formula (I), wherein R¹, R², R³, and R⁴ are each independently hydrogen, or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5-membered to 14-membered aryl, wherein the alkyl-substituted 5-membered to 14-membered aryl are substituted with substituent A selected from the group consisting of a C₁-C₂₀-alkyl and a C₁-C₁₀-heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups.

According to one embodiment of the present invention, the core-shell particle comprises a shell comprising a polymer according to general formula (I), wherein R¹, R², R³, and R⁴ are each independently hydrogen, or a radical selected from the group consisting of linear or branched C₁-C₃₈-alkyl, and unsubstituted or alkyl-substituted 5-membered to 14-membered aryl, wherein the alkyl-substituted 5-membered to 14-membered aryl are substituted with substituent A selected from the group consisting of a C₁-C₂₀-alkyl and a C₁-C₁₀-heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups.

In another embodiment of the present invention, the core-shell particle comprises a shell comprising a polymer according to general formula (I), wherein R¹, R², R³ and R⁴ are not substituted by any functional group, i.e., R¹, R², R³ and R⁴ are unsubstituted.

A preferred embodiment of R¹, R², R³, and R⁴ concerning unsubstituted linear or branched C₁-C₃₈-alkyl is unsubstituted linear or branched C₃-C₃₈-alkyl. Another preferred embodiment of R¹, R², R³, and R⁴ concerning unsubstituted linear or branched C₁-C₃₈-alkyl is unsubstituted linear or branched C₉-C₃₂-alkyl. Another preferred embodiment of R¹, R², R³, and R⁴ concerning unsubstituted linear or branched C₁-C₃₈-alkyl is unsubstituted linear or branched C₁₀-C₃₀-alkyl Another preferred embodiment of R¹, R², R³, and R⁴ concerning unsubstituted linear or branched C₁-C₃₈-alkyl is unsubstituted linear or branched C₁₂-C₂₈-alkyl. Another preferred embodiment of R¹, R², R³, and R⁴ concerning unsubstituted linear or branched C₁-C₃₈-alkyl is unsubstituted linear or branched C₁₆-C₂₄-alkyl.

A preferred embodiment of R¹, R², R³, and R⁴ concerning substituted linear or branched C₁-C₃₈-alkyl correspond to the preferred embodiments of unsubstituted linear or branched C₁-C₃₈-alkyl, further comprising at least one functional group selected from the group consisting of primary alcohols, secondary alcohols, tertiary alcohols, aldehydes, ketones, ethers, esters, carboxylic acids, carbamates, hydroxamate, xanthates, primary amines, secondary amines, tertiary amines, quaternary amines, imines, nitriles, azides, amides, hydroxylamines, N-oxides, hydrazines, hydrazones, nitrites, nitrates, primary thiols, secondary thiols, tertiary thiols, thioaldehydes, thioketones, thioethers, thioesters, sulfides, sulfites, sulfates, sulfoxides, sulfones, sulfonates, sulfoxylates, sulfonates, silanes, carbosilanes, silanoles, siloxanes, silylenes, phosphoryls, phosphates, phosphonates, phosphites, phosphines, phosphinates, primary alkyl halides, secondary alkyl halides, tertiary alkyl halides, and the like.

A preferred embodiment of R¹, R², R³, and R⁴ concerning unsubstituted linear or branched C₂-C₃₈-alkenyl is unsubstituted linear or branched C₃-C₃₈-alkenyl. Another preferred embodiment of R¹, R², R³, and R⁴ concerning unsubstituted linear or branched C₂-C₃₈-alkenyl is unsubstituted linear or branched C₉-C₃₂-alkenyl, Another preferred embodiment of R¹, R², R³, and R⁴ concerning unsubstituted linear or branched C₂-C₃₈-alkenyl is unsubstituted linear or branched C₁₀-C₃₀-alkenyl Another preferred embodiment of R¹, R², R³, and R⁴ concerning unsubstituted linear or branched C₂-C₃₈-alkenyl is unsubstituted linear or branched C₁₂-C₂₈-alkenyl. Another preferred embodiment of R¹, R², R³, and R⁴ concerning unsubstituted linear or branched C₁-C₃₈- alkenyl is unsubstituted linear or branched C₁₆-C₂₄-alkenyl.

A preferred embodiment of R¹, R², R³, and R⁴ concerning substituted linear or branched C₂-C₃₈-alkenyl correspond to the preferred embodiments of unsubstituted linear or branched C₂-C₃₈-alkenyl, further comprising at least one functional group selected from the group consisting of primary alcohols, secondary alcohols, tertiary alcohols, aldehydes, ketones, ethers, esters, carboxylic acids, carbamates, hydroxamate, xanthates, primary amines, secondary amines, tertiary amines, quaternary amines, imines, nitriles, azides, amides, hydroxylamines, N-oxides, hydrazines, hydrazones, nitrites, nitrates, primary thiols, secondary thiols, tertiary thiols, thioaldehydes, thioketones, thioethers, thioesters, sulfides, sulfites, sulfates, sulfoxides, sulfones, sulfonates, sulfoxylates, sulfonates, silanes, carbosilanes, silanoles, siloxanes, silylenes, phosphoryls, phosphates, phosphonates, phosphites, phosphines, phosphinates, primary alkyl halides, secondary alkyl halides, tertiary alkyl halides, and the like.

A preferred embodiment of R¹, R², R³, and R⁴ concerning unsubstituted linear or branched C₂-C₃₈-alkinyl is unsubstituted linear or branched C₃-C₃₈-alkinyl. Another preferred embodiment of R¹, R², R³, and R⁴ concerning unsubstituted linear or branched C₂-C₃₈-alkinyl is unsubstituted linear or branched C₉-C₃₂-alkinyl. Another preferred embodiment of R¹, R², R³, and R⁴ concerning unsubstituted linear or branched C₂-C₃₈-alkinyl is unsubstituted linear or branched C₁₀-C₃₀-alkinyl Another preferred embodiment of R¹, R², R³, and R⁴ concerning unsubstituted linear or branched C₂-C₃₈-alkinyl is unsubstituted linear or branched C₁₂-C₂₈-alkinyl. Another preferred embodiment of R¹, R², R³, and R⁴ concerning unsubstituted linear or branched C₂-C₃₈-alkinyl is unsubstituted linear or branched C₁₆-C₂₄-alkinyl.

A preferred embodiment of R¹, R², R³, and R⁴ concerning substituted linear or branched C₂-C₃₈-alkinyl correspond to the preferred embodiments of unsubstituted linear or branched C₂-C₃₈-alkinyl, further comprising at least one functional group selected from the group consisting of primary alcohols, secondary alcohols, tertiary alcohols, aldehydes, ketones, ethers, esters, carboxylic acids, carbamates, hydroxamate, xanthates, primary amines, secondary amines, tertiary amines, quaternary amines, imines, nitriles, azides, amides, hydroxylamines, N-oxides, hydrazines, hydrazones, nitrites, nitrates, primary thiols, secondary thiols, tertiary thiols, thioaldehydes, thioketones, thioethers, thioesters, sulfides, sulfites, sulfates, sulfoxides, sulfones, sulfonates, sulfoxylates, sulfonates, silanes, carbosilanes, silanoles, siloxanes, silylenes, phosphoryls, phosphates, phosphonates, phosphites, phosphines, phosphinates, primary alkyl halides, secondary alkyl halides, tertiary alkyl halides, and the like.

A preferred embodiment R¹, R², R³, and R⁴ concerning unsubstituted 5-membered to 14-membered aryl are -phenyl, -naphthyl, anthracenyl, pyrdinyl, -pyridinyl, -pyrimidinyl, -pyrazyl, -imidazolyl, benzimidazolyl, or -furanyl.

A preferred embodiment R¹, R², R³, and R⁴ concerning alkyl-substituted 5-membererd to 14-membered aryl are phenyl or naphthyl, further containing at least one substituent A.

According to one embodiment of the present invention, the core-shell particle comprises a shell comprising a polymer according to general formula (I), wherein up to 5 substituents A are present. According to one embodiment, up to 4 substituents A are present. According to one embodiment, up to 3 substituents A are present. According to one embodiment, up to 2 substituents A are present. According to one embodiment, 1 substituent A is present.

According to a preferred embodiment of the present invention, the core-shell particle comprises a shell comprising a polymer according to general formula (I), wherein one or two substituents A are present. According to another preferred embodiment, one substituent A is present.

In one embodiment of alkyl-substituted 5-membered to 14-membered aryl regarding substituent A are linear or branched C₁-C₂₀-alkyl. Preferred embodiments regarding substituent A are linear or branched C₁-C₆-alkyl, preferably C₁-C₄-alkyl, further preferably C₁-C₃-alkyl.

Preferred of R¹, R², R³, and R⁴ regarding alkyl-substituted 5-membered to 14-membered aryls are benzyl, tolyl, o-xylyl, m-xylyl, p-xylyl, xylidyl, benzyl, phenyloctane, phenyldecane, phenylduodecan, and phenylcetyl

In one embodiment of alkyl-substituted 5-membered to 14-membered aryl regarding substituent A are linear or branched C₁-C₁₀-heteroalkyl. Preferred embodiments regarding substituent A are linear or branched C₁-C₆-heteroalkyl. In a preferred embodiment, the linear or branched heteroalkyl contains at least one heteroatom selected from the group consisting of N, O, P, S, and Si. The at least one heteroatom may be either the point of attachment, such as in - Het-CH₂-, part of the chain, such as in -CH₂-Het-CH₂-, or the heteroatom may be terminal, such as in -CH₂-Het, wherein "Het" denotes the heteroatom. In case the heteroatom is terminal or has free valences, the free valences may be occupied by hydrogen.

In one embodiment regarding substituent A being a C₁-C₁₀-heteroalkyl, the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups.

In a preferred embodiment regarding substituent A being a C₁-C₁₀-heteroalkyl, the C₁-C₁₀-heteroalkyl contains at least one functional group selected from the group consisting of primary alcohols, secondary alcohols, tertiary alcohols, aldehydes, ketones, ethers, esters, carboxylic acids, carbamates, hydroxamate, xanthates, primary amines, secondary amines, tertiary amines, quaternary amines, imines, nitriles, azides, amides, hydroxylamines, N-oxides, hydrazines, hydrazones, nitrites, nitrates, primary thiols, secondary thiols, tertiary thiols, thioaldehydes, thioketones, thioethers, thioesters, sulfides, sulfites, sulfates, sulfoxides, sulfones, sulfonates, sulfoxylates, sulfonates, silanes, carbosilanes, silanoles, siloxanes, silylenes, phosphoryls, phosphates, phosphonates, phosphites, phosphines, phosphinates, primary alkyl halides, secondary alkyl halides, tertiary alkyl halides, and the like. According to another preferred embodiment regarding substituent A being a C₁-C₁₀-heteroalkyl, the C₁-C₁₀-heteroalkyl contains at least one functional group selected from the group consisting of primary amines, secondary amines, tertiary amines, amides, imides, primary alcohols, secondary alcohols, tertiary alcohols, ethers, aldehyde, ketone, carboxylic acids, thiols, thioethers, hydroxamates, xanthates, and carbamates.

In a preferred embodiment of the present invention, the core-shell particle comprises a shell comprising a polymer according to general formula (I), wherein R¹, R², R³, and R⁴ are each independently hydrogen or a radical selected from the group consisting of linear or branched C₉-C₃₂-alkyl. In another preferred embodiment, R¹, R², R³, and R⁴ are each independently hydrogen, or a radical selected from the group consisting of linear or branched C₁₀-C₃₀-alkyl. In another preferred embodiment, R¹, R², R³, and R⁴ are each independently hydrogen, or a radical selected from the group consisting of linear or branched C₁₂-C₂₈-alkyl. In another preferred embodiment, R¹, R², R³, and R⁴ are each independently hydrogen, or a radical selected from the group consisting of linear or branched C₁₆-C₂₄-alkyl.

In one embodiment of the present invention, the core-shell particle comprises a shell comprising a polymer according to general formula (I), wherein at least one of R¹ or R² and at least one of R³ and R⁴ is hydrogen, and the remaining R¹, R², R³ and R⁴ are each independently hydrogen, or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5-membered to 14-membered aryl as defined above.

In one embodiment of the present invention, the core-shell particle comprises a shell comprising a polymer according to general formula (I), wherein at least one of R¹ or R² and at least one of R³ and R⁴ is hydrogen, and the remaining R¹, R², R³ and R⁴ are each independently hydrogen, or a radical selected from the group consisting of linear or branched C₁-C₃₈-alkyl, and unsubstituted or substituted 5-membered to 14-membered aryl as defined above. In a preferred embodiment of the present invention, the core-shell particle comprises a shell comprising a polymer according to general formula (I), wherein at least one of R¹ or R² and at least one of R³ and R⁴ is hydrogen, and the remaining R¹, R², R³ and R⁴ are each independently hydrogen or any one of the preferred embodiments regarding the linear or branched C₁-C₃₈-alkyl, and unsubstituted or alkyl-substituted 5-membered to 14-membered-aryl as defined above.

In one embodiment of the present invention, the core-shell particle comprises a shell comprising a polymer according to general formula (I), wherein three of R¹, R², R³ and R⁴ are hydrogen and the remaining R¹, R², R³ or R⁴ is a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl,, and unsubstituted or alkyl-substituted 5-membered to 14-membered-aryl as defined above.

In one embodiment of the present invention, the core-shell particle comprises a shell comprising a polymer according to general formula (I), wherein three of R¹, R², R³ and R⁴ are hydrogen and the remaining R¹, R², R³ or R⁴ is a radical selected from the group consisting of linear or branched C₁-C₃₈-alkyl, and unsubstituted or alkyl-substituted 5-membered to 14-membered-aryl as defined above. In a preferred embodiment of the present invention, the core-shell particle comprises a shell comprising a polymer according to general formula (I), wherein three of R¹, R², R³ and R⁴ are hydrogen, and the remaining R¹, R², R³ or R⁴ is a radical according to any one of the preferred embodiments regarding the linear or branched C₁-C₃₈-alkyl, and unsubstituted or alkyl-substituted 5-membered to 14-membered-aryl as defined above.

According to another preferred embodiment of the present invention, the core shell particle comprises a shell comprising at least one polymer of the general formula (I), wherein R², R³, and R⁴ are hydrogen, i.e. the copolymer has the general structure of formula (II) 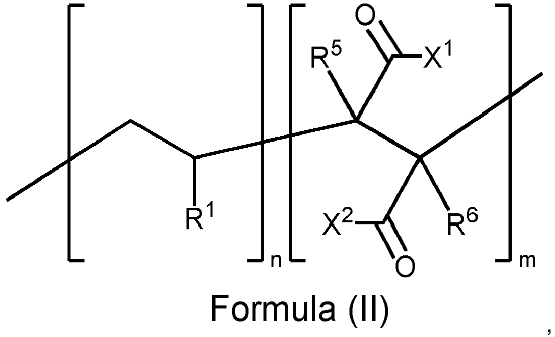 wherein R⁵ and R⁶ are each independently hydrogen, or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl, wherein the alkyl-substituted 5- to 14-membered aryl or heteroaryl are substituted with at least one substituent A each independently selected from the group consisting of a C₁-C₂₀-alkyl and a C₁-C₁₀-heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups,
wherein R¹ is a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl,
wherein the alkyl-substituted 5- to 14-membered aryl or heteroaryl are substituted with at least one substituent A each independently selected from the group consisting of a C₁-C₂₀-alkyl and a C₁-C₁₀-heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups, and
wherein X¹ and X² are each independently OM, wherein M is hydrogen or an ion selected from the group consisting of NH₄⁺, Li⁺, Na⁺, K⁺, and Rb⁺ or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl, and/or NHM, wherein M is hydrogen, or an ion selected from the group consisting of Li⁺, Na⁺, K⁺, and Rb⁺, or a radical selected from the group consisting of linear or branched, substituted or unsubstituted C₁-C₃₈-alkyl, linear or branched, substituted or unsubstituted C₂-C₃₈-alkenyl, linear or branched substituted or unsubstituted C₂-C₃₈-alkinyl, and unsubstituted or alkyl-substituted 5-to 14-membered aryl or heteroaryl, and/or
any two X¹ and X² together are linked via an oxygen atom to form a succinic anhydride ring, or via an NH to form a succinimide ring, or via an NR7 to form an N-substituted succinimide ring, wherein R⁷ is selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl; and
wherein n and m are each independently integers in the range of from about 1 to about 1000.

According to another preferred embodiment of the present invention, the core shell particle comprises a shell comprising at least one polymer of the general formula (II), wherein R⁵ and R⁶ are each independently hydrogen or methyl, and R¹ is a radical selected from unsubstituted or substituted C₁-C₃₈ alky, and
two X¹ and X² are linked via an oxygen atom, and wherein n and m are each independently from each other integers in the range of from 1 to about 1000, wherein the monomer units are arranged in an alternating manner.

According to another preferred embodiment of the present invention, the core shell particle comprises a shell comprising at least one polymer of the general formula (II), wherein R⁵ and R⁶ are each independently hydrogen or methyl, and R¹ is a radical selected from unsubstituted or substituted C₉-C₃₂ alky, and
two X¹ and X² are linked via an oxygen atom, and wherein n and m are each independently from each other integers in the range of from 1 to about 1000, wherein the monomer units are arranged in an alternating manner.

According to another preferred embodiment of the present invention, the core shell particle comprises a shell comprising at least one polymer of the general formula (II), wherein R⁵ and R⁶ are each independently hydrogen or methyl, and R¹ is a radical selected from unsubstituted or substituted C₁₂-C₂₈ alky, and
two X¹ and X² are linked via an oxygen atom, and wherein n and m are each independently from each other integers in the range of from 1 to about 1000, wherein the monomer units are arranged in an alternating manner.

According to another preferred embodiment of the present invention, the core shell particle comprises a shell comprising at least one polymer of the general formula (II), wherein R⁵ and R⁶ are each independently hydrogen or methyl, and R¹ is a radical selected from unsubstituted or substituted C₁-C₃₈ alky, and
wherein X¹ and X² are OM, wherein M is hydrogen or an ion selected from the group consisting of NH₄⁺, Li⁺, Na⁺, K⁺, and Rb⁺, and wherein n and m are each independently from each other integers in the range of from 1 to about 1000, wherein the monomer units are arranged in an alternating manner.

According to another preferred embodiment of the present invention, the core shell particle comprises a shell comprising at least one polymer of the general formula (II), wherein R⁵ and R⁶ are each independently hydrogen or methyl, and R¹ is a radical selected from unsubstituted or substituted C₉-C₃₂ alky, and
wherein X¹ and X² are each independently OM⁺, and/or NH₂, wherein M is hydrogen or an ion selected from the group consisting of NH₄⁺, Li⁺, Na⁺, K⁺, and Rb, and wherein n and m are each independently from each other integers in the range of from 1 to about 1000, wherein the monomer units are arranged in an alternating manner.

According to another preferred embodiment of the present invention, the core shell particle comprises a shell comprising at least one polymer of the general formula (II), wherein R⁵ and R⁶ are each independently hydrogen or methyl, and R¹ is a radical selected from unsubstituted or substituted C₁₂-C₂₈ alky, and
wherein X¹ and X² are each independently OM and/or NH₂, wherein M is hydrogen or an ion selected from the group consisting of NH₄⁺, Li⁺, Na⁺, K⁺, and Rb⁺, and wherein n and m are each independently from each other integers in the range of from 1 to about 1000, wherein the monomer units are arranged in an alternating manner.

According to another preferred embodiment of the present invention, the core shell particle comprises a shell comprising at least one polymer of the general formula (III) 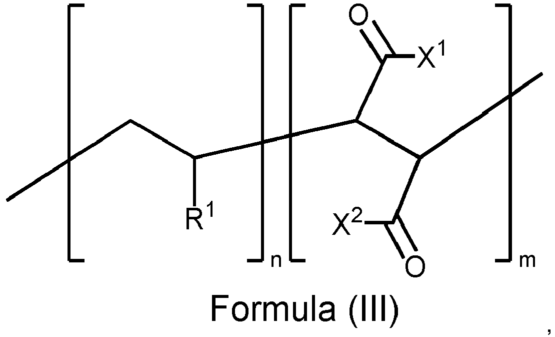 wherein R¹ is a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl,
wherein the alkyl-substituted 5- to 14-membered aryl or heteroaryl are substituted with at least one substituent A each independently selected from the group consisting of a C₁-C₂₀-alkyl and a C₁-C₁₀-heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups, and
wherein X¹ and X² are each independently OM, wherein M is hydrogen or an ion selected from the group consisting of NH₄⁺, Li⁺, Na⁺, K⁺, and Rb⁺ or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl, and/or NHM, wherein M is hydrogen, or an ion selected from the group consisting of Li⁺, Na⁺, K⁺, and Rb⁺, or a radical selected from the group consisting of linear or branched, substituted or unsubstituted C₁-C₃₈-alkyl, linear or branched, substituted or unsubstituted C₂-C₃₈-alkenyl, linear or branched substituted or unsubstituted C₂-C₃₈-alkinyl, and unsubstituted or alkyl-substituted 5-to 14-membered aryl or heteroaryl, and/or
any two X¹ and X² together are linked via an oxygen atom to form a succinic anhydride ring, or via an NH to form a succinimide ring, or via an NR7 to form an N-substituted succinimide ring, wherein R⁷ is selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl; and
wherein n and m are each independently integers in the range of from about 1 to about 1000.

According to another preferred embodiment of the present invention, the core shell particle comprises a shell comprising at least one polymer of the general formula (III), wherein R¹ is a radical selected from unsubstituted or substituted C₁-C₃₈ alky, and
two X¹ and X² are linked via an oxygen atom, and wherein n and m are each independently from each other integers in the range of from 1 to about 1000, wherein the monomer units are arranged in an alternating manner.

According to another preferred embodiment of the present invention, the core shell particle comprises a shell comprising at least one polymer of the general formula (III), wherein R¹ is a radical selected from unsubstituted or substituted C₉-C₃₂ alky, and
two X¹ and X² are linked via an oxygen atom, and wherein n and m are each independently from each other integers in the range of from 1 to about 1000, wherein the monomer units are arranged in an alternating manner.

According to another preferred embodiment of the present invention, the core shell particle comprises a shell comprising at least one polymer of the general formula (III), R¹ is a radical selected from unsubstituted or substituted C₁₂-C₂₈ alky, and
two X¹ and X² are linked via an oxygen atom, and wherein n and m are each independently from each other integers in the range of from 1 to about 1000, wherein the monomer units are arranged in an alternating manner.

According to another preferred embodiment of the present invention, the core shell particle comprises a shell comprising at least one polymer of the general formula (III), R¹ is a radical selected from unsubstituted or substituted C₁-C₃₈ alky, and
wherein X¹ and X² are OM, wherein M is hydrogen or an ion selected from the group consisting of NH₄⁺, Li⁺, Na⁺, K⁺, and Rb⁺, and wherein n and m are each independently from each other integers in the range of from 1 to about 1000, wherein the monomer units are arranged in an alternating manner.

According to another preferred embodiment of the present invention, the core shell particle comprises a shell comprising at least one polymer of the general formula (III), R¹ is a radical selected from unsubstituted or substituted C₉-C₃₂ alky, and
wherein X¹ and X² are each independently NH₂ or OM, wherein M is hydrogen or an ion selected from the group consisting of NH₄⁺, Li⁺, Na⁺, K⁺, and Rb⁺, and wherein n and m are each independently from each other integers in the range of from 1 to about 1000, wherein the monomer units are arranged in an alternating manner.

According to another preferred embodiment of the present invention, the core shell particle comprises a shell comprising at least one polymer of the general formula (III), wherein R¹ is a radical selected from unsubstituted or substituted C₁₂-C₂₈ alky, and
wherein X¹ and X² are each independently NH₂ or OM, wherein M is hydrogen or an ion selected from the group consisting of NH₄⁺, Li⁺, Na⁺, K⁺, and Rb⁺, and wherein n and m are each independently from each other integers in the range of from 1 to about 1000, wherein the monomer units are arranged in an alternating manner.

It is generally understood, that throughout all embodiments described herein, not all of R¹, R², R³ and R⁴ are hydrogen. In such case, the polymer according to general formula (I) may be water-soluble and, hence, would not be useful for the purposes of the present invention.

In one embodiment of the present invention, the core-shell particle comprises a shell comprising a polymer according to general formula (I), (II), or (III), wherein n and m are each independently integers in the range of from about 1 to about 1000. In another embodiment of the present invention, the core-shell particle comprises a shell comprising a polymer according to general formula (I), (II), or (III), wherein n and m are each independently integers in the range of from about 1 to about 500. In a preferred embodiment of the present invention, the core-shell particle comprises a shell comprising a polymer according to general formula (I), (II), or (III), wherein n and m are each independently integers in the range of from about 5 to about 250. In another preferred embodiment of the present invention, the core-shell particle comprises a shell comprising a polymer according to general formula (I), (II), or (III), wherein n and m are each independently integers in the range of from about 5 to about 125. In another preferred embodiment of the present invention, the core-shell particle comprises a shell comprising a polymer according to general formula (I) , (II), or (III), wherein n and m are each independently integers in the range of from or of from about 40 to about 60.

In another embodiment of the present invention, the core-shell particle comprises a shell comprising a polymer according to general formula (I) , (II), or (III), wherein n and m are each independently integers in the range of from about 1 to about 1000. In another embodiment of the present invention, the core-shell particle comprises a shell comprising a polymer according to general formula (I) , (II), or (III), wherein n and m are each independently integers in the range of from about 1 to about 500. In a preferred embodiment of the present invention, the core-shell particle comprises a shell comprising a polymer according to general formula (I) , (II), or (III), wherein n and m are each independently integers in the range of from about 2 to about 250. In another preferred embodiment of the present invention, the core-shell particle comprises a shell comprising a polymer according to general formula (I) , (II), or (III), wherein n and m are each independently integers in the range of from about 3 to about 125. In another preferred embodiment of the present invention, the core-shell particle comprises a shell comprising a polymer according to general formula (I) , (II), or (III), wherein n and m are each independently integers in the range of from or of from about 4 to about 25. In another preferred embodiment of the present invention, the core-shell particle comprises a shell comprising a polymer according to general formula (I), (II), or (III), wherein n and m are each independently integers in the range of from or of from about 4 to about 10.

The average number of repeating units, i.e., n and m, can be acquired and determined via the number average molecular weight Mₙ and the elemental composition of the polymer knowing the formula of the monomers.

According to one embodiment of the present invention, the core-shell particle comprises a shell comprising a polymer according to general formula (I), (II), or (III), wherein the at least one copolymer of formula (I), (II), or (III) has a number average molar mass Mₙ in the range of from about 500 g/mol to about 250,000 g/mol. According to another embodiment of the present invention, the core-shell particle comprises a shell comprising a polymer according to general formula (I), (II), or (III), wherein the at least one copolymer of formula (I), (II), or (III) has a number average molar mass Mₙ in the range of from about 750 g/mol to about 200,000 g/mol. According to a preferred embodiment of the present invention, the core-shell particle comprises a shell comprising a polymer according to general formula (I), (II), or (III), wherein the at least one copolymer of formula (I) has a number average molar mass Mₙ in the range of from about 1000 g/mol to about 150,000 g/mol. According to another preferred embodiment of the present invention, the core-shell particle comprises a shell comprising a polymer according to general formula (I), (II), or (III) , wherein the at least one copolymer of formula (I) has a number average molar mass Mₙ in the range of from about 1,500 g/mol to about 50,000 g/mol. According to another preferred embodiment of the present invention, the core-shell particle comprises a shell comprising a polymer according to general formula (I), (II), or (III), wherein the at least one copolymer of formula (I) has a number average molar mass Mₙ in the range of from about 1,500 g/mol to about 25,000 g/mol. According to another preferred embodiment of the present invention, the core-shell particle comprises a shell comprising a polymer according to general formula (I), (II), or (III), wherein the at least one copolymer of formula (I) has a number average molar mass Mₙ in the range of from about 2,000 g/mol to about 10,000 g/mol. According to another preferred embodiment of the present invention, the core-shell particle comprises a shell comprising a polymer according to general formula (I), (II), or (III), wherein the at least one copolymer of formula (I) has a number average molar mass Mₙ in the range of from about 2,000 g/mol to about 5,000 g/mol.

According to the present invention, the number average molar mass Mₙ of the polymer according to the present invention can be acquired using Gel Permeation Chromatography (GPC) and/or Size Exclusion Chromatography (SEC). Both methods are known to the skilled artisan and are, for example, described in Skoog, D.A., Principles of Instrumental Analysis, 6th ed., Thompson Brooks/Cole: Belmont, CA, 2006.

In one embodiment of the present invention, the core-shell particle comprises a shell comprising a polymer according to general formula (I), (II), or (III), wherein the ratio of n divided by m, hereinafter also referred to as the ratio on n/m, is in the range of from about 0.1 to about 10. In another embodiment of the present invention, the core-shell particle comprises a shell comprising a polymer according to general formula (I), (II), or (III), wherein the ratio of n/m is in the range of from about 0.2 to about 8. In a preferred embodiment of the present invention, the core-shell particle comprises a shell comprising a polymer according to general formula (I), (II), or (III), wherein the ratio of n/m is in the range of from about 0.5 to about 5. In another preferred embodiment of the present invention, the core-shell particle comprises a shell comprising a polymer according to general formula (I), (II), or (III), wherein the ratio of n/m is in the range of from about 0.75 to about 3. In another preferred embodiment of the present invention, the core-shell particle comprises a shell comprising a polymer according to general formula (I), (II), or (III), wherein the ratio of n/m is in the range of from about 0.9 to about 1.1. In another preferred embodiment of the present invention, the core-shell particle comprises a shell comprising a polymer according to general formula (I), (II), or (III), wherein the ratio of n/m is about 1.

According to a preferred embodiment of the present invention, the monomers of the copolymer of formula (I) are arranged in a predominantly alternating manner. In another preferred embodiment, the monomers of the copolymer of formula (I) are arrange in an alternating manner. In other words, each ethylene dicarboxylic acid monomer or monomer derived from ethylene dicarboxylic acid is arranged between two olefin monomers.

According to one embodiment of the present invention, the core-shell particle comprises a shell comprising a polymer according to general formula (I), (II), or (III), wherein the polymer of general formula (I) is terminated with groups R¹, R², R³, R⁴, R⁵, and/or R⁶ as defined above.

In another embodiment, the core-shell particle comprises a polymer according to general formula (I) as defined above and an additive selected from the group consisting of paraffines, polyolefines, polyacrylates, polystyrenes, and mixtures thereof.

According to another preferred embodiment of the present invention, the core shell particle comprises a shell comprising at least one polymer of the general formula (I), wherein R⁵ and R⁶ are hydrogen or methyl, three out of R¹, R², R³, R⁴ are hydrogen or methyl, and the remaining R¹, R², R³ or R⁴ is unsubstituted or substituted C₁-C₃₈ alky, X¹ and X² are each independently OM, wherein M is hydrogen or an ion selected from the group consisting of NH₄⁺, Li⁺, Na⁺, K⁺, and Rb⁺, and wherein n and m are each independently from each other integers in the range of from 4 to about 10, wherein the monomer units are arranged in an alternating manner.

### Process of preparation

The present invention further relates to a process for the preparation of a core-shell particle according to the present invention by coating the at least one core with at least one polymer according to general formula (I), (II), or (III) as defined above.

The process of the invention can, for example, be carried out by spraying a reagent solution comprising the polymer of the general formula (I), (II), or (III) onto the at least one core. A further method of bringing the cores to be coated and a polymer of the general formula (I), (II), or (III) as defined above into contact with one another comprises, for example, suspending the cores in a liquid polymer or polymer melt of the general formula (I), (II), or (III) or in a solution or dispersion of a polymer of the general formula (I), (II), or (III) in a suitable solvent. Corresponding processes are known per se to those skilled in the art.

The coating of the abovementioned polymer according to general formula (I), (II), or (III) onto the at least one core can be carried out by processes known to those skilled in the art, for example by contacting of the substrates in a solvent, for example water or alcohols such as ethanol, glycole, n-butanol, iso-butanol, ketones, such as acetone, and mixtures thereof, aliphatic or aromatic hydrocarbon solvents, like heptane or toluene, at a temperature in the range from room temperature to the boiling point of the solvent. Afterwards, the slurry comprising the at least one core, the at least one polymer of the general formula (I), (II), or (III) and the solvent is stirred. Under reduced pressure, for example at less than 1 bar, for example less than 800 mbar, further preferred less than 500 mbar, the solvent is removed and polymer of the general formula (I), (II), or (III) is coated onto the cores. After conventional work-up, the coating product of the at least one core and the polymer of general formula (I), (II), or (III) can be obtained. According to one embodiment of the present invention the coated particles can be heat treated, for example in a conventional oven that is known to the skilled artisan, at a temperature of 100 to 220 °C, typically for 0.5 to 2 hours. Such heat treatment is preferred when the polymer contains reactive functional groups or in the presence of reactants that may lead to a crosslinking of polymer chains, an example of such reagents are organic peroxides or oxygen.

### Use of core-shell particle

The present invention *inter alia* relates to the use of a core-shell particle according to the present invention in an agglomeration-deagglomeration process, in particular in chemical, physical or biological test methods or separation processes, decontamination processes, water purification, recycling of electrical/electronic scrap or gravity separation.

According to the invention, an agglomeration-deagglomeration cycle is a process in which the core-shell particles of the invention, in particular magnetic core-shell particles, are brought into contact with themselves or other particles, substances, materials, etc., in solution or dispersion and agglomerate as a result of hydrophobic interaction, ionic forces, van der Waals interactions and/or other attractive forces. These agglomerates are then processed in further processes, for example separated from other components and/or the solution or dispersion. After this treatment, the agglomerates may then be separated again, i.e., deagglomerated, so that the core-shell particles and the other particles, substances, materials, etc., are again present separately (deagglomeration).

Examples of agglomeration-deagglomeration cycles which are preferred according to the invention are chemical, physical or biological test methods or separation processes, decontamination of contaminated, for example heavy metal-contaminated earth, water purification, recycling of wastes, such as electrical/electronic scrap or gravity separation.

The core-shell particles according to the present invention are preferably used in a separation process for the separation of value containing matter containing material from ore material or from slag material, wherein the value containing matter containing material(s) are agglomerated with core-shell particles according to the present invention. The agglomerates are then separated, and afterwards the agglomerates are disaggregated to obtain the value containing matter containing material in a more concentrated form. In this way, the core-shell particles can be reused. The separation of the agglomerates can be done by gravity or magnetic forces i.e. by dense media separation, flotation or magnetic separation. In the case of flotation processes, the usage of particles forming agglomerates is known in the art as carrier flotation.

The core-shell particles according to the present invention are preferably used in a separation process for the separation of value containing matter containing material from ore material or from slag material, wherein the value containing matter containing material(s) are agglomerated with magnetic core-shell particles according to the present invention, the magnetic agglomerates are then magnetically separated, and afterwards the agglomerates are disaggregated to obtain the value containing matter containing material in a more concentrated form. In this way, the core-shell particles can be reused.

In chemical, physical or biological test methods or separation processes, use is made of, for example, specifically modified magnetic core-shell particles which e.g., have anchor groups for a specific antigen or virus, e.g., borrelia, HIV, hepatitis, on their surface. Bonding of these antigens/viruses to the core-shell particles (agglomeration) enables these constituents to be separated off from a solution by means of magnetic separation and thus detected. The core-shell particles are then recycled by means of surfactants which again release the electrostatic, adhesive or van der Waals interaction between core-shell particles and antigen/virus (deagglomeration). In this way, the core-shell particles can be reused.

The core-shell particles of the invention, in particular magnetic core-shell particles, can be used in water purification. Here, for example, it is possible to use core-shell particles which remove organic constituents, suspended materials or fat droplets from the water by effecting hydrophobic agglomeration between the core-shell particles and the hydrophobic contaminant.

These hydrophobic agglomerates can be separated off by filtration, sedimentation, centrifugation or decantation, or magnetic separation. In a preferred embodiment, the separation is a magnetic separation. In order for the water purification to be economical, it is useful to "unload" the core-shell particles from the contaminant again and return them to the circuit. This "unloading" can once again be affected by deagglomeration using a specific surface-active substance (a surfactant), in particular a non-ionic surfactant, and/or by means of a specific solvent or solvent mixture.

Recycling of electrical/electronic scrap can, for example, be carried out by magnetic recovery of materials of value (Ir, Pt, Ru) from electrical/electronic scrap, once again preferably using core-shell particles which, after hydrophobicization of the materials of value to be separated, can agglomerate with these and be separated off. After the agglomerates have been separated off, they are optionally deagglomerated again so that the core-shell particles can be reused, or processed further via e.g., smelting without deagglomeration and core-shell particles recycling step.

A further example is gravity separation, e.g., by means of hydrocyclones known to those skilled in the art. In this way, relatively dense constituents can be separated off from less dense constituents by means of a gravity separation. If the densities of the individual components differ only slightly, e.g., Pt-doped hematite and undoped hematite, the density of the component to be separated off can be increased by agglomeration with a further component. Here, for example, the Pt-doped hematite component is coated according to the invention to give core-shell particles, so that addition of hydrophobicized barium sulfate gives an agglomerate of the modified hematite and barium sulfate which has a greater density difference from the undoped hematite. After the agglomerate has been separated off, it can be deagglomerated again.

An advantage of the invention is that the core-shell particles according to the invention are stable under the conditions prevailing in agglomeration and especially deagglomeration and can therefore preferably be reused. The reuse of the core-shell particles of the invention allows for processes requiring less raw material(s) and thus the process can be performed more cost efficient.

The present invention further relates to the use of a core-shell particle according to the present invention in electrostatic printing and electrophotographic development.

According to the invention, an electrostatic printing and electrophotographic development, also called xerography, is a process in which the core-shell particles of the invention are dispersed in a liquid to form an ink for printing, i.e., as a toner. These ink is then used in an ink jet printer to print characters and/or figures on a surface. Such figures and/or characters may have a metallic luster. Development occurs due to electrostatic attraction between the particles and the surface.

### Process for separating

In one embodiment, the present invention further relates to a process for separating at least one first material from a mixture comprising this at least one first material and at least one second material, which comprises the following steps:
(A) contacting of the mixture comprising the at least one first material and the at least one second material with at least one surface-modifying substance, optionally in the presence of at least one dispersant, resulting in the surface-modifying substance becoming attached to the at least one first material,
(B) if appropriate, addition of at least one dispersant to the mixture obtained in step (A) to give a dispersion having a suitable concentration,
(C) treatment of the dispersion from step (A) or (B) with at least one core-shell particle according to the present invention, wherein the at least one first material to which the at least one surface-modifying substance is attached and the at least one core-shell particle form an agglomerate, preferably wherein at least one metal and/or at least one compound of the at least one core-shell particle, or the mixture of at least one metal and/or at least one compound thereof and at least one semimetal and/or at least one compound thereof is magnetic, preferably ferromagnetic or ferrimagnetic, and
(D) separation of the agglomerate formed in step (C) from the mixture by application of a magnetic field,
(E) cleavage of the addition product which has been separated off in step (D) to obtain the at least one first material and the at least one core-shell particle separately.

In another embodiment, the present invention is directed to a process for separating at least one first material from a mixture comprising said at least one first material and at least one second material, wherein the process comprises the following steps:
(A) contacting of the mixture comprising the at least one first material and the at least one second material with at least one surface-modifying substance, optionally in the presence of at least one dispersant,
(B) if appropriate, addition of at least one dispersant to the mixture obtained in step (A),
(C) treatment of the dispersion from step (A) or (B) with at least one core-shell particle according to the present invention, wherein the at least one metal and/or at least one compound thereof, or the mixture of at least one metal and/or at least one compound thereof and at least one semimetal and/or at least one compound thereof is magnetic, and the at least one first material to which the at least one surface-modifying substance is attached and the at least one core-shell particle form an agglomerate,
(D) separation of the agglomerate from step (C) from the mixture by application of a magnetic field.

The single steps of the process according to the present invention are explained in more detail in the following:

### Step (A):

Step (A) of the process of the invention comprises contacting a mixture comprising at least one first material and at least one second material with at least one surface-modifying substance, optionally in the presence of at least one dispersant.

By such contact, the surface-modifying substance attaches to the at least one first material.

The process of the invention is preferably employed for separating at least one first, hydrophobic material from a mixture comprising this at least one first, hydrophobic material and at least one second, hydrophilic material.

Dispersion media for dispersion as per step (A) of the process of the invention are selected from the group consisting of water, water-soluble organic compounds, such as alcohols (e.g., C₁-C₆ alcohols) and mixtures thereof, particularly preferably water.

In a preferred embodiment, the dispersion medium is water. In another preferred embodiment, the dispersion medium is water and further comprises salts.

In a preferred embodiment of the process of the invention, the at least one first material is at least one hydrophobic metal compound and the at least one second material is preferably at least one hydrophilic metal compound.

Thus, the at least one first material to be separated off is preferably a metal compound selected from the group consisting of sulfidic ores, oxidic and/or carbonate-comprising ores, for example azurite [Cu₃(CO₃)₂(OH)₂] or malachite [Cu₂[(OH)₂CO₃], and the noble metals and their compounds to which a surface-active compound can become selectively attached to produce hydrophobic surface properties.

Examples of the at least one first material, being preferably the hydrophobic or hydrophobizable metal compound to be separated off are preferably compounds selected from the group consisting of sulfidic ores, oxidic and/or carbonate-comprising ores, for example azurite [Cu₃(CO₃)₂(OH)₂] or malachite [Cu₂[(OH)₂CO₃]], rare earth metals comprising ores like bastnaesite (Y, Ce, La)CO₃F, monazite (Re)PO₄ (RE = rare earth metal) or chrysocolla (Cu,Al)₂H₂Si₂O₅(OH)₄ hydrate, noble metals in elemental form and their compounds to which a surface modifying compound can become selectively attached to produce hydrophobic properties. Examples of noble metals that may be present as at least one first material are Au, Pt, Pd, Rh etc., preferably in the native state or as sulphides, phosphides, selenides, tellurides or as alloys with bismuth, antimony and/or other metals. Further examples of sulfidic ores that can be separated off according to the present invention are, for example, selected from the group consisting of copper ores consisting of covellite CuS, molybdenum(IV) sulfide, chalcopyrite (cupiferous pyrite) CuFeS₄, bornite Cu₅FeS₄, chalcocite (copper glass) Cu₂S, pendlandite (Fe,Ni)₉S₈ and mixtures thereof.

Further examples of platinum group metal sulfides include vysotskite, braggite, cooperite or their solid solution in other sulfide minerals like pentlandite or base metal sulfides like chalcopyrite. Further none-sulfide separable Platinum-Group-Metals (PGM) minerals may be hydrophobizable intermetallic com-pounds like isoferroplatinum or moncheite, or other telluride PGM-containing minerals. Further examples of separable PGM minerals in form of sulfide, hydrophobizable intermetallic, arsenide or telluride minerals can be found e.g., in a review article "Platinum Group Metals and compounds", in "Ullmann's Encyclopaedia of Industrial Chemistry", 2005 Wiley-VCH Verlag GmbH & Co. KGaA, Weinheim, doi: 10.1002/14356007.a21 075, Chapter 3, page 9.

The at least one hydrophilic metal compound is preferably selected from the group consisting of oxidic and hydroxidic metal compounds, for example silicon dioxide SiO₂, silicates, aluminosilicates, for example feldspars, for example albite Na(Si₃Al)O₈, mica, for example muscovite KAl₂[(OH,F)₂AlSi₃O₁₀], Garnets (Mg, Ca, Fe^{II})₃(Al, Fe^{III})₂(SiO₄)₃,Al₂O₃, FeO(OH), FeCO₃, Fe₂O₃, Fe₃O₄ and further related minerals and mixtures thereof.

Examples of sulfidic ores which can be used according to the invention are, for example, selected from the group of copper ores consisting of covellite CuS, molybdenum(IV) sulfide, chalcopyrite (cupriferous pyrite) CuFeS₂, bornite Cu₅FeS₄, chalcocite (copper glass) Cu₂S and mixtures thereof.

Suitable oxidic metal compounds which can be used according to the invention are preferably selected from the group consisting of silicon dioxide SiO₂, silicates, aluminosilicates, for example feldspars, for example albite Na(Si₃Al)O₈, mica, for example muscovite KAl₂[(OH,F)₂AlSi₃O₁₀], garnets (Mg, Ca, Fe^{II})₃(Al, Fe^{III})₂(SiO₄)₃, plagioclase feldspar, orthopyroxene, olivine, clay minerals and further related minerals and mixtures thereof.

Accordingly, ore mixtures obtained from mines are preferably used in the process of the invention.

According to a further preferred embodiment, the process according to the present invention is conducted in order to separate slag, for example smelter slag or furnace slag. These materials are in general known to the skilled artisan.

In a preferred embodiment, the slag which is treated according to the present invention, is selected from furnace slag, for example resulting from processing concentrates from platinum group metals (PGMs) bearing ores, spent catalyst materials or mixtures thereof.

The slag, preferably furnace slag, which is preferably employed in the process according to the present invention is preferably obtained from melting processes known to the skilled artisan, for example to obtain metals like Mo, Cu, Ni, Ag, Hg, Au, Pt, Pd, Rh, Ru, Ir, Os or mixtures thereof. For example, electric arc smelting is used in these furnaces and is further employed in process such as smelting of scrap iron.

In a preferred embodiment the at least one metal which is to be separated from the slag according to the present invention is selected from the group consisting of Ag, Au, Pt, Pd, Rh, Ru, Ir, Os, Cu, Mo, Ni, Mn, Zn, Pb, Te, Sn, Hg, Re, V, Fe and mixtures thereof. In principle, these metals may be present in elemental form or as compounds, for example in oxidic and/or sulfidic form, as a binary compound or a component in a multimetal compound. In a further embodiment of the present invention the mentioned precious metals are present in form of metal compounds, like for example, alloys with other metals e.g., Fe, Cu, Ni, Pb, Bi, with each other, and/or compounds with nonmetals e.g., phosphides, arsenides, sulphides, selenides, tellurides etc. Particularly preferred metal compounds are metal alloys.

Preferably the present invention relates to the process according to the present invention, wherein the at least metal is selected from the group consisting of Au, Pt, Ir, Pd, Os, Ag, Hg, Rh, Ru and mixtures thereof, in particular Au, Pt, Pd, Rh, further preferred Pt, Pd, Rh.

In a preferred embodiment of the present invention, the slag, preferably the furnace slag, that is used is a solid solution and preferably comprises further components selected from the group consisting of SiO₂, CaO, Al₂O₃, MgO, P₂O₃, ZrO₂, Fe₂O₃, FeO₄, CeO₂, Cr₂O₃, complex oxide matrices and mixtures thereof. These oxides are not necessarily present in the slag matrix as isolated compounds, but may only be present as complex oxides. It is common to represent a mixed metal oxide as comprised of binary oxides of the respective metals. In this text, this nomenclature shall be used. Said solid solution may be amorphous and/or glass-like, or may contain crystalline material comprised of metal oxides listed above.

A very typical composition of a furnace slag that can particularly preferably be used in the process according to the present invention comprises 5 to 80 % by weight SiO₂, 20 to 50 % by weight CaO, 0 to 60 % by weight Al₂O₃, 0 to 10 % by weight MgO, 0 to 10 % by weight P₂O₅, 0 to 10 % by weight ZrO₂, 0 to 10 % by weight Fe₂O₃, and optionally other iron oxides, 0 to 10 % by weight CeO₂, and optionally other components.

In a preferred embodiment of the process of the invention, the mixture comprising at least one first material and at least one second material in step (A) is in the form of particles having a size of from 100 nm to 100 µm, see, for example US 5,051 ,199. In a preferred embodiment, this particle size is obtained by milling. Suitable processes and apparatuses are known to those skilled in the art, for example wet milling in a ball mill. The mixture comprising at least one first material and at least one second material is therefore milled to particles having a size of from 100 nm to 100 µm before or during step (A) in a preferred embodiment of the process of the invention.

Preferred ore mixtures comprising metals like Mo, Cu, Au and/or Ag have a content of sulfidic minerals of 0.1 to 10 % by weight, preferably 0.4 to 1.0 % by weight. For platinum group metals (PGM) like Ru, Rh, Pd, Pt, Os and Ir, the content of PGM containing minerals like sulfides, arsenides, tellurides or intermetallic compounds may be significantly lower, e.g., 0.3 to 20 ppm by weight, preferably 0.6 to 2 ppm by weight.

Examples of sulfidic minerals which are present in the mixtures which can be used according to the invention are those mentioned above. In addition, sulfide of metals other than copper, for example, sulfides of iron, lead, zinc or molybdenum, i.e., FeS/FeS₂, PbS, ZnS or MoS₂, can also be present in the mixtures. Furthermore, oxidic compounds of metals and semimetals, for example silicates or borates or other salts of metals and semimetals, for example phosphates, sulfates or oxides/hydroxides/carbonates, and further salts, for example azurite [Cu₃(CO₃)₂(OH)₂], malachite [Cu₂[(OH)₂(CO₃)]], barite (BaSO₄), monazite ((La-Lu)PO₄), can be present in the ore mixtures to be treated according to the invention. Further examples of the at least one first material which is separated off by the process of the invention are noble metals, for example Au, Pt, Pd, Rh, etc., preferably in the native state.

A typical ore mixture which can be separated by means of the process of the invention has the following composition: about 30 % by weight of SiO₂, about 10 % by weight of Na(Si₃Al)O₈, about 3 % by weight of Cu₂S, about 1 % by weight of MoS₂, balance chromium, iron, titanium and magnesium oxides. If ore mine tailings are treated according to the present invention, the amount of copper may be lower, e.g., 0.1 to 0.3 % by weight Cu₂S, for example 0.2 % by weight Cu₂S.

For the purposes of the present invention, "surface-modifying substance" means a substance which is able to alter the surface of the particle to be separated off in the presence of other particles which are not to be separated off in such a way that attachment of a hydrophobic particle occurs as a result of hydrophobic interactions, ionic forces, van der Waals interactions and/or other attractive forces. Surface-modifying substances which can be used according to the invention selectively attach or bind to the at least one first material and thereby make the first material suitably hydrophobic. "Selectively" means, for the purposes of the present invention, that the partition coefficient of the surface-modifying substance between the surface of the at least one first material and the surface of the at least one second material is generally > 1, preferably > 100, particularly preferably > 10 000, i.e., the surface-modifying substance preferentially binds to the surface of the at least one first material and not to the surface of the at least one second material.

For example, if the surface-modifying substance is a collector, it preferentially binds to the surface of the at least one first material compared to the surface of the at least one second material. In an alternative example, the hydrophobizing agent preferentially binds to the surface of the magnetic particle (first material) compared to the surface of the at least one second material.

In one embodiment of the present invention, the process of the invention is preferably carried out using a surface-modifying substance of the general formula (V)

A-Z (V)

which binds to the at least one first material, wherein
A is selected from the group consisting of linear or branched C₂-C₃₀-alkyl, C₂-C₃₀-heteroalkyl, optionally substituted C₆-C₃₀-aryl, optionally substituted C₆-C₃₀-heteroalky, C₆-C₃₀-aralkyl, and
Z is a group by means of which the compound of the general formula (V) binds to the at least one first material.
In a particularly preferred embodiment, A is a linear or branched C₂-C₁₂-alkyl, very particularly preferably a linear C₂-C₅-alkyl, in particular a C₂- or C₄-alkyl, or a C₈-alkyl.

In a further preferred embodiment, A is preferably a linear or branched, preferably linear, C₆-C₂₀-alkyl. Furthermore, A is preferably a branched C₆-C₁₄-alkyl in which the at least one substituent, preferably having from 1 to 6 carbon atoms, is preferably present in the 2 position, for example 2-ethylhexyl and/or 2-propylheptyl.

In a further particularly preferred embodiment, Z is selected from the group consisting of anionic groups -(X)ₙ-PO₃²⁻, -(X)ₙ-PO₂S²⁻, -(X)ₙ-POS₂²⁻, -(X)ₙ-PS₃²⁻, -(X)ₙ-PS²⁻, -(X)ₙ-POS⁻, -(X)ₙ-PO²⁻, -(X)ₙ-PO₃²⁻, -(X)ₙ-CO₂⁻, -(X)ₙ-CS₂⁻, -(X)ₙ-COS⁻, -(X)ₙ-C(S)NHOH, -(X)ₙ-S⁻, wherein X is selected from the group consisting of O, S, NH, CH₂ and n = 0, 1 or 2, if appropriate with cations selected from the group consisting of hydrogen, NR4⁺, wherein the radicals R are each independently of one another, hydrogen or C₁-C₈-alkyl, an alkali metal or alkaline earth metal. The anions mentioned and the corresponding cations form, according to the invention, uncharged compounds of the general formula (V).

If n = 2 in the formulae mentioned, then two identical or different, preferably identical, groups A are bound to a group Z.

In a particularly preferred embodiment, use is made of compounds selected from the group consisting of xanthates A-O-CS₂⁻, dialkyldithiophosphates (A-O)₂-PS₂⁻, dialkyldithiophosphinates (A)₂-PS₂⁻ and mixtures thereof, wherein the radicals A are each, independently of one another, a linear or branched, preferably linear, C₆-C₂₀-alkyl, preferably n-octyl, or a branched C₆-C₁₄-alkyl in which the branch is preferably present in the 2 position, for example 2-ethylhexyl and/or 2-propylheptyl. Counterions present in these compounds are preferably cations selected from the group consisting of hydrogen, NR4⁺, wherein the radicals R are each, independently of one another, hydrogen or C₁-C₈-alkyl, an alkali or alkaline earth metal, in particular sodium or potassium.

Very particularly preferred compounds of the general formula (V) are selected from the group consisting of sodium or potassium ethyl xanthate, sodium or potassium n-octylxanthate, sodium or potassium butylxanthate, sodium or potassium di-n-octyldithiophosphinate, sodium or potassium di-n-octyldithiophosphate, sodium, ammonium or potassium salts of 2-ethyl-hexylxanthate, dixanthogenates and mixtures of these compounds.

In the case of noble metals, for example Au, Pd, Rh etc., particularly preferred surface-active substances are monothiols, dithiols and trithiols or 8-hydroxyquinolines, for example as described in EP 1 200 408 B1 and potassium salts of 2-ethyl-hexylxanthate and mixtures of these compounds.

In the case of metal oxides, for example FeO(OH), Fe₃O₄, ZnO etc., carbonates, for example azurite [Cu(CO₃)₂(OH)₂], malachite [Cu₂[(OH)₂CO₃]], particularly preferred surface-active substances are octylphosphonic acid (OPA), (EtO)₃Si-A, (MeO)₃Si-A, with the abovementioned meanings for A. In a preferred embodiment of the process of the invention, no hydroxamates are used as surface-active substances for modifying metal oxides.

In the case of metal sulfides, for example Cu₂S, MoS₂, etc., particularly preferred surface-active substances are monothiols, dithiols and trithiols or xanthogenates.

In a further preferred embodiment of the process of the invention, Z is -(X)ₙ-CS₂⁻, -(X)ₙ-PO₂⁻ or -(X)ₙ-S⁻, wherein X is O, and n is 0 or 1, and a cation selected from among hydrogen, sodium and potassium. Very particularly preferred surface-active substances are 1-octanethiol, potassium n-octylxanthate, potassium butylxanthate, octylphosphonic acid or a compound of the formula (VI)

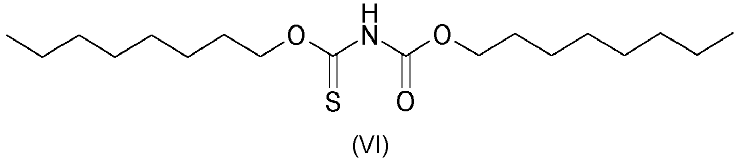

The at least one surface-modifying substance is generally used in an amount which is sufficient to achieve the desired effect. In a preferred embodiment, the at least one surface-modifying substance is added in an amount of from 0.0005 to 5% by weight, in each case based on the total solid present in the mixture to be treated.

According to a preferred embodiment of the process according to the present invention, the at least one surface-modifying substance is a compound of the general formula (VII) or derivative thereof

[(A)ᵢ(Z)ⱼ]ₖ (VII)

wherein each A is independently selected from linear or branched C₁-C₃₀-alkyl, C₂-C₃₀-alkenyl C₁-C₃₀-heteroalkyl, optionally substituted C₆-C₃₀-aryl, C₆-C₃₀-cycloalkyl, C₆-C₃₀-heteroalkyl, C₆-C₃₀-heterocycloalkyl, C₆-C₃₀-aralkyl, each of which may be unsubstituted or optionally substituted;
and each Z is independently selected from anionic groups, cationic groups or non-ionic groups;
i is an integer number of 1, 2, 3, 4, 5, 6, 7, 8, 9 or 10;
j is an integer number of 1, 2, 3, 4, 5, 6, 7, 8, 9 or 10; and
k is an integer number of 1, 2, 3, 4, 5, 6, 7, 8, 9 or 10 to 100.

It is understood that formula (VII) includes all possible combinations of how each A and each Z may be attached to one another. This includes any linear attachment, such as in -A-A-Z-Z-, A-Z-A-Z-, -Z-A-Z-A- and the like; branched attachments, such as in 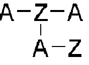 and the like; and circular attachments such as in 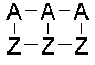 and the like. The skilled person is able to identify suitable attachment sites, such as substitution sites, in substituent A and Z that allow the attachment.

Furthermore, particularly preferred attachment sites are indicated in the respective definition of substituent Z.

In a particularly preferred embodiment, A is a linear or branched C₁-C₁₄-alkyl, and preferably a linear C₄-alkyl or C₈-alkyl.

In a further preferred embodiment, A is preferably a branched C₁-C₂₀-alkyl, particularly preferably a branched C₆-C₁₄-alkyl, wherein preferably at least one branch, preferably a branch having 1 to 6 carbon atoms, is attached in 2-position, such as in 2-ethylhexyl and/or 2-propylheptyl. Corresponding compounds being substituted in 2-position are, for example, obtained using the Guerbet reaction that is known to the skilled artisan as one reaction step.

In a preferred embodiment, Z is selected as an anionic group. Non-limiting examples of anionic groups are

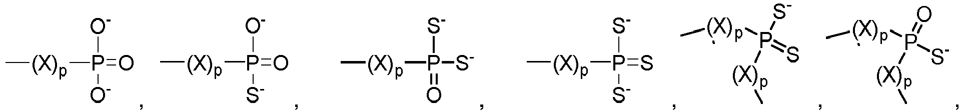

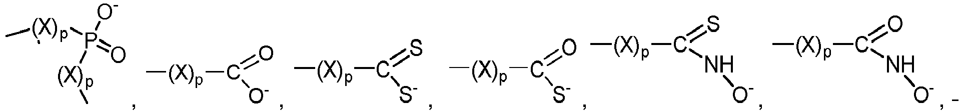

(X)ₚ-S⁻ ;

wherein each X is independently selected from the group consisting of O, S, NH, CH₂; and each p is independently selected from 0, 1 or 2.

In a preferred embodiment, the anionic group is present as a salt with at least one cation wherein preferably the at least one cationic counter ion is selected from the group consisting of hydrogen, N(R¹¹)₄⁺; wherein each R¹¹ is independently selected from hydrogen, C₁-C₈-alkyl, hydroxy-substituted C₁-C₈-alkyl or C₁-C₈-heteroalkyl, preferably HO-CH₂CH₂- or HO-CH₂CH₂-O-CH₂CH₂-; alkali- or earth alkali metals, preferably sodium or potassium; or combinations thereof.

The negatively charged anionic groups may of course also be present in a protonated form, depending, for example, on the pH of the aqueous environment. For example, the -(X)ₚ-S⁻ anion group may be present as a -(X)ₚ-SH neutral group.

In another preferred embodiment, Z is selected as a cationic group. Non-limiting examples of cationic groups include, but are not limited to,
-NH3⁺,

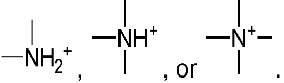

The cationic group may of course also be present in a deprotonated form, depending, for example, on the pH. For instance, -NH₃⁺ may also be present as -NH₂.

In another preferred embodiment, Z is selected as a non-ionic group. Examples of non-ionic groups include, but are not limited to, -XA-, 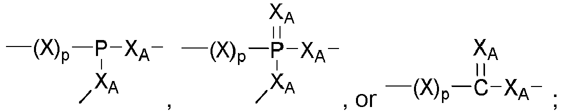 wherein each X is defined as indicated above and each X_{A} is independently O or S.

In a preferred embodiment, the at least one surface-modifying substance is a compound of formula (VIIA) or derivative thereof

A-Z₁-A (VIIA)

wherein each A is selected as described above and wherein Z₁ is selected from the group consisting of 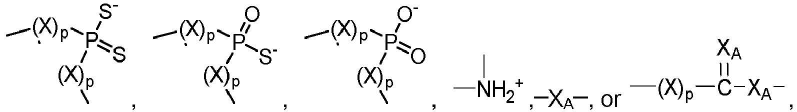 wherein X, X_{A} and p are defined as described above.

In another preferred embodiment, the at least one surface-modifying substance is a compound of formula (VIIB) or derivative thereof

A-Z₁-A-Z₂ (VIIB)

wherein A and Z₁ are defined as described above and wherein Z₂ is selected from the group consisting of 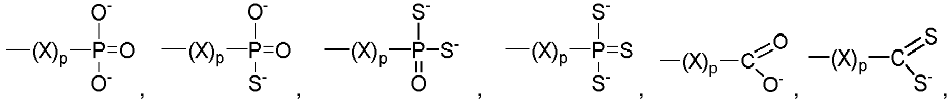 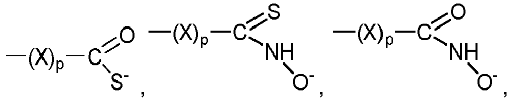 -(X)ₚ₋S⁻ , and NH₃⁺ ; and wherein X and p are as defined above.

In yet another preferred embodiment, the at least one surface-modifying substance is a compound of formula (VIIC) or derivative thereof 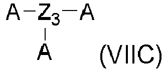 wherein A is selected as defined above and wherein Z₃ is selected from the group consisting of

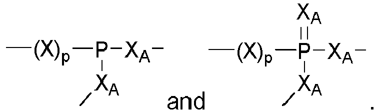

In yet another preferred embodiment, the at least one surface-modifying substance is a compound of formula (VIID) or formula (VIIE),

A-Z₁-A-Z₂ (VIID),

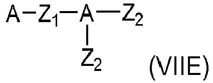

wherein A, Z₁, and Z₂ are defined as described above.

In yet another embodiment, the at least one surface-modifying substance is a compound of formula (VIIF) or (VIIG) or derivatives thereof

A-[Z₁-A]_{q}-Z₂ (VIIF)

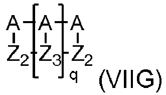

wherein q is an integer of 1, 2, 3, 4 or 5 to 100 and A, Z₁, Z₂ or Z₃ are defined as described above.

In a further preferred embodiment, the at least one surface-modifying substance is selected from
(i) xanthates, preferably xanthates of formula (VIIH) or (VIIJ) or derivatives thereof 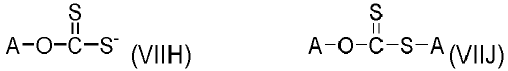
(ii) dithiophosphates, preferably dithiophosphates of formula (VIIK) or derivatives thereof 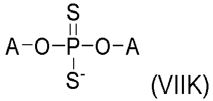
(iii) dithiophosphinates, preferably dialkyldithiophosphinates of formula (VIIL) or derivatives thereof 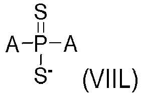
(iv) dialkyldithiocarbamates, preferably dialkyldithiocarbamates of formula (VIIM) or derivatives thereof 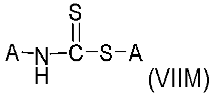 or
(v) alkyltrithiocarbamates preferably alkyltrithiocarbamates of formula (VIIN) or derivatives thereof 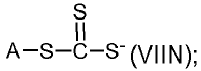 or mixtures thereof, wherein each A is defined as described above. In a preferred embodiment, each A is independently selected from a group consisting of a linear or branched and preferably linear C₆-C₂₀-alkyl, more preferably n-octyl; or a branched C₆-C₁₄-alkyl, wherein the branch is preferably located in 2-position, for example 2-ethylhexyl and/or 2-propylheptyl.

In an especially preferred embodiment, the at least one surface-modifying substance is selected from the group consisting of sodium- or potassium-n-octylxanthate, sodium- or potassium-butylxanthate, sodium- or potassium-di-n-octyldithiophosphinate, sodium- or potassium-di-n-octyldithiophosphate, sodium- or potassium-di-n-octyldithiocarbamates, sodium- or potassium-ethyl-hexyl-xanthate and mixtures thereof.

In a particularly preferred embodiment, the at least one surface-modifying substance is selected from the group consisting of potassium-n-octyl xanthate (1:1 salt of carbonodithionic acid O-ocytyl ester) or potassium-di-n-octyldithiophosphinate or mixtures thereof.

In a preferred embodiment, preferred surface-modifying substance for valuable matter containing material wherein the at least one valuable matter is a noble metal, such as Au, Pd, Rh, etc., are monothiols, dithiols and trithiols, or 8-hydroxyquinolines and preferably, the monothiols, dithiols and trithiols, or 8-hydroxyquinolines as described in EP 1 200 408.

In another preferred embodiment, preferred surface-modifying substance for valuable matter containing material wherein the at least one valuable matter is a metal sulfide, such as Cu₂S, MoS₂, FeS₂ etc., are monothiols, dithiols and trithiols, xanthates or dithiophosphates.

In a preferred embodiment, the at least one surface-modifying substance is used in an amount which is sufficient to achieve the desired effect. In a preferred embodiment, the at least one collector is added in an amount of from about 0.0001 to about 1% by weight and preferably from about 0.001 to about 0.1% by weight in each case based on the weight of total dry solid content.

### Step (B):

Optional Step (B) of the process according to the present invention comprises addition of at least dispersion medium to the mixture or dispersion of step (A).

The mixture obtained in step (A) comprises, in one embodiment, at least one dispersion medium, agglomerates of at least one first material and at least one magnetic particle, at least one second material and, if appropriate, surface-modifying substances, polymeric compounds, etc., depending on which embodiment has been carried out in step (A).

### Step (B) can be carried out, i.e., further dispersion medium is added, in order to obtain a dispersion having a lower concentration.

Suitable dispersion media are all dispersion media which have been mentioned above with regard to step (A). In a particularly preferred embodiment, the dispersion medium in step (B) is water.

In general, the amount of dispersion medium added in step (A) and optionally in step (B), according to the invention, can be selected so that a dispersion which is readily stirrable and/or conveyable is obtained. In a preferred embodiment, the amount of mixture to be treated based on the total slurry or dispersion is up to about 90 % by weight, particularly preferably from about 5 to about 50 % by weight. In another embodiment, the amount to be treated is from about 5 to about 40 % by weight solid content wherein the solid content is based on the total amount of solids present.

In a preferred embodiment of the process of the invention, step (B) is not carried out but instead step (A) is carried out from the beginning in an aqueous dispersion having an appropriate solid content or concentration.

The optional addition of dispersion medium in step (B) of the process of the invention can, according to the invention, be carried out by all methods known to those skilled in the art.

### Step (C):

Step (C) of the process of the invention comprises treatment of the dispersion from step (A) or (B) with at least one core-shell particle according to the present disclosure, wherein the at least one first material to which the at least one surface-modifying substance is attached and the at least one core-shell particle form an agglomerate, preferably wherein at least one metal and/or at least one compound of the at least one core-shell particle, or the mixture of at least one metal and/or at least one compound thereof and at least one semimetal and/or at least one compound thereof is magnetic, preferably ferromagnetic or ferrimagnetic.

In a preferred embodiment, step (C) of the process of the invention comprises treatment of the dispersion from step (A) or (B) with at least one core-shell particle according to the present invention, wherein the at least one metal and/or at least one compound thereof, or the mixture of at least one metal and/or at least one compound thereof and at least one semimetal and/or at least one compound thereof is magnetic and the at least one first material to which the at least one surface-modifying substance is attached and the at least one core-shell-particle form an agglomerate.

As used herein, the agglomerate may also be referred to as an addition product. As used herein, the core-shell particle according to the present invention, wherein the at least one metal and/or at least one compound thereof, or the mixture of at least one metal and/or at least one compound thereof and at least one semimetal and/or at least one compound thereof is magnetic, may also be referred to as a magnetic core-shell particle.

Core-shell particles according to the present invention that are used in step (C) of the process according to the present invention are explained in detail above.

According to a preferred embodiment of the process according to the present invention, step (A), bringing the at least one first material comprised in the mixture into contact with a surface-modifying substance in order to hydrophobize the at least one first material, is conducted before step (C), bringing this mixture into contact with at least one magnetic core-shell particle so that the at least one magnetic core-shell particle and the at least one first material which has been hydrophobized on the surface agglomerate.

According to a further preferred embodiment of the process according to the present invention, step (C), bringing the at least one magnetic core-shell particle into contact with the at least one first material comprised in the mixture, is conducted before step (A), addition of at least one surface-modifying substance, so that the at least one magnetic core-shell particle and the at least one first material which has been hydrophobized on the surface agglomerate.

According to a further preferred embodiment the mixture comprising at least one first material and the at least one second material is contacted with at least one magnetic material and at least one surface-modifying substance, steps (A) and (C), at the same time, so that the at least one magnetic core-shell particle and the at least one first material which has been hydrophobized on the surface agglomerate.

The treatment of the solution or dispersion with at least one hydrophobic magnetic core-shell particle in step (C) of the process of the invention can be carried out by all methods known to those skilled in the art.

In a preferred embodiment, the at least one magnetic core-shell particle is dispersed in a suitable dispersion medium.

Suitable dispersion media are all dispersion media in which the at least one magnetic core-shell particle is not completely soluble. Suitable dispersion media for dispersion as per step (C) of the process of the invention are selected from the group consisting of water, water-soluble organic compounds and mixtures thereof, particularly preferably water. Particular preference is given to using the same dispersion medium in step (C) as in step (B). Further preferred dispersion media of the core-shell particles according to the present invention are aqueous solutions of surfactants, preferably of non-ionic surfactants, having for example a concentration of 0.01 to 1 % by weight, preferably 0.05 to 0.5 % by weight.

According to the invention, the amount of dispersion medium for predispersing the magnetic core-shell particles can generally be selected so that a slurry or dispersion which is readily stirrable and/or conveyable is obtained. In a preferred embodiment, the amount of mixture to be treated based on the total slurry or dispersion is up to 60 % by weight.

According to the invention, the dispersion of the magnetic core-shell particles can be produced by all methods known to those skilled in the art. In a preferred embodiment, the magnetic core-shell particles to be dispersed and the appropriate amount of dispersion medium or mixture of dispersion media are combined in a suitable reactor, for example a glass reactor, and stirred by means of devices known to those skilled in the art, for example in a glass tank by means of a magnetically operated propeller stirrer, for example at a temperature of from 1 to 80 °C, preferably at room temperature.

The treatment of the dispersion with at least one magnetic core-shell particle is generally carried out by combining the two components by methods known to those skilled in the art. In a preferred embodiment, a dispersion of the at least one magnetic core-shell particle is added to the mixture which has previously been treated with at least one surface-modifying substance in step (A). In a further embodiment, the magnetic particle in solid form can be added to a dispersion of the mixture to be treated obtained in step (A) or (B). In a further preferred embodiment, both components are present in dispersed form.

Step (C) is generally carried out at a temperature of from 1 to 80 °C, preferably from 10 to 40 °C.

In step (C), the at least one magnetic core-shell particle becomes attached to the hydrophobic material of the mixture to be treated, i.e., an agglomerate is formed. This attachment/Agglomeration between the two components is based on hydrophobic interactions. There is generally no bonding interaction between the at least one magnetic core-shell particle and the hydrophilic component of the mixture, so that these components do not become attached to one another, i.e., do not or essentially do not agglomerate. Thus, agglomerates (i.e., addition products) of the at least one hydrophobic material and the at least one magnetic core-shell particle are present alongside the at least one hydrophilic material in the mixture after step (C).

### Step (D):

Step (D) of the process of the invention comprises separation of the agglomerate (addition product) from step (C) from the mixture by application of gravity or a magnetic field, preferably by flotation or by application of a magnetic field, more preferably by application of a magnetic field.

In a preferred embodiment, step (D) of the process of the invention comprises separation of the agglomerate (addition product) from step (C) from the mixture by application of a magnetic field.

Step (D) can, in a preferred embodiment, be carried out by introducing a permanent magnet into the reactor in which the mixture from step (C) is present. In a preferred embodiment, a dividing wall composed of non-magnetic material, for example the glass wall of the reactor, is present between the permanent magnet and mixture to be treated. In a further preferred embodiment of the process of the invention, an electromagnet which is only magnetic when an electric current flows is used in step (D). Suitable apparatuses are known to those skilled in the art.

Step (D) of the process of the invention can be carried out at any suitable temperature, for example from 10 to 60 °C.

During step (D), the mixture is preferably continuously stirred by means of a suitable stirrer, for example a Teflon stirrer bar or a propeller stirrer.

In step (D), the addition product from step (C) can, if appropriate, be separated off by all methods known to those skilled in the art, for example by draining the liquid together with the hydrophilic component of the suspension from the reactor used for step (D) via the bottom valve or pumping the components of the suspension which are not held back by the at least one magnet away through a hose.

### Step (E):

In one embodiment of the process of the present invention, step (E) comprises cleavage of the agglomerate (addition product) which has been separated off in step (D) to obtain the at least one first material and the at least one core-shell particle separately, which is preferably magnetic. In a preferred embodiment of the process of the invention, the cleavage in step (E) is carried out in a non-destructive manner, i.e., the individual components present in the dispersion are not changed chemically. For example, the cleavage according to the invention is not affected by oxidation of the hydrophobicizing agent, for example to give the oxidation products or degradation products of the hydrophobicizing agent.

Cleavage can be carried out by all methods known to those skilled in the art which are suitable for cleaving the addition product in such a way that the at least one magnetic particle can be recovered in reusable form. In a preferred embodiment, the magnetic particle which has been cleaved off is reused in step (C).

In a preferred embodiment, the cleavage in step (E) of the process of the invention is effected by treatment of the agglomerate (addition product) with a substance selected from the group consisting of organic solvents, basic compounds, acidic compounds, oxidants, reducing agents, surface-active substances and mixtures thereof.

Examples of suitable organic solvents are alcohols, such as methanol, ethanol, propanol, for example n-propanol or isopropanol; aromatic solvents, for example benzene, toluene, xylenes; ethers, for example diethyl ether, methyl t-butyl ether; ketones, for example acetone; aromatic or aliphatic hydrocarbons, for example saturated hydrocarbons with for example 6 to 15 carbon atoms, for example dodecane and/or Shellsol^{®}, Diesel fuel and mixtures thereof. The main components of Diesel fuel are predominantly alkanes, cycloalkanes and aromatic hydrocarbons having about 9 to 22 carbon atoms per molecule and a boiling range between 170 °C and 390 °C.

Examples of basic compounds which can be used according to the invention are aqueous solutions of basic compounds, for example aqueous solutions of alkali metal and/or alkaline earth metal hydroxides, for example KOH, NaOH, lime water, aqueous ammonia solutions, aqueous solutions of organic amines of the general formula R¹⁰₃N, where the radicals R¹⁰ are selected independently from the group consisting of C₁-C₈-alkyl which may optionally be substituted by further functional groups. In a preferred embodiment, step (D) is carried out by addition of aqueous NaOH solution to a pH of about 13, for example in order to separate off Cu₂S modified with octyl phosphonic acid (OPA). The acidic compounds can be mineral acids, for example HCI, H₂SO₄, HNO₃ or mixtures thereof, organic acids, for example carboxylic acids. As oxidants, it is possible to use H₂O₂, for example as 30 % strength by weight aqueous solution (Perhydrol). The separation of Cu₂S modified with thiols is preferably carried out using H₂O₂ or Na₂S₂O₄.

Examples of surface-modifying substances which can be used according to the invention are nonionic, anionic, cationic and/or amphoteric (zwitterionic) surfactants.

In a preferred embodiment, the addition product of hydrophobic material and magnetic particle is cleaved by means of a cationic, anionic or non-ionic surfactant or an organic solvent, particularly preferably by means of a non-ionic surfactant. This process can also be aided mechanically e.g. by stirring or other means to introduce shear. In a preferred embodiment, ultrasound is used for aiding the cleavage process.

In general, the organic solvent is used in an amount which is sufficient to cleave virtually all of the agglomerate (addition product). In a preferred embodiment, from about 20 ml to about 100 ml of organic solvent are used per gram of addition product of hydrophobic material and magnetic particle to be cleaved.

After cleavage, the at least one first material and the at least one magnetic core-shell-particle are, according to the invention, present as dispersion in the abovementioned cleavage reagent, preferably an organic solvent.

The at least one magnetic core-shell particle can be separated from the dispersion comprising this at least one magnetic core-shell particle and the at least one first material by means of a permanent magnet or electromagnet. Details of the separation are analogous to step (D) of the process of the invention.

The present invention therefore preferably relates to the process as mentioned above, wherein after cleavage according to step (E) the at least one magnetic core-shell particle is separated from the dispersion comprising this at least one magnetic core-shell particle and the at least one first material by means of a permanent magnet or electromagnet.

Due to the very specific copolymer that is present in the shell of the core-shell particles, in particular in the magnetic core-shell particles according to the present invention, these core-shell particles show a very high stability under the conditions of the separation process according to the present invention. Therefore, the core-shell particles according to the present invention can advantageously be reused in the separation process, preferably without significant loss of hydrophobicity at the surface. In one embodiment, after a agglomeration / deagglomeration cycle at least about 70% of the core-shell particles originally used in said cycle can be recovered. In another embodiment, at least about 75%, at least about 80% or at least about 85% of the core-shell particles originally used in said cycle can be recovered.

These recovered core-shell particles may be recycled into the process and used again for separating material.

The first material to be separated off, preferably the metal compound to be separated off, is preferably separated from the organic solvent by distilling off the organic solvent. The first material which can be obtained in this way can be purified by further processes known to those skilled in the art. The solvent can, if appropriate after purification, be recirculated to the process of the invention.

The present invention further relates to the process as mentioned above, wherein after step (D) the following step (F) is conducted:

### Step (F):

According to the present invention, the particles or the agglomerate from step (D) may further be processed via smelting, extracting and/or wet chemical refining under the provision that no step (E) is conducted.

The magnetic core-shell particles or agglomerates obtained in step (D) preferably comprise iron comprising magnetic substances or magnetic particles in addition to at least one first material. Because iron is essentially necessary for melting and/or smelting processes to obtain the at least one first in pure form, the core-shell particles or agglomerates that are obtained in step (D) of the process according to the present invention can directly be treated in a smelting and/or melting process. While iron containing particles may support the alloying process during smelting, core-shell-particles of non-ferrous materials may support the formation of slags. Particles containing e.g. a core made from silica or alumina may report to the slag phase in a smelting process.

In the case that precious metals are used as first material in combination with iron comprising magnetic core-shell particles, no need for further addition of other iron containing compounds exists. Instead, the magnetic iron oxide containing core-shell particles loaded with precious metals are added to the furnace feed in place of iron oxide otherwise added to the process.

In a further embodiment of the present invention, the at least one first material obtained in step (F) is further processed by pyrometallurgy and/or hydometallurgy. Methods of pyrometallurgy and/or hydrometallurgy are generally known to the person skilled in the art. For example, methods of pyrometallurgy may be the melting of first material in an oven. For example, methods of hydrometallurgy may be the dissolution of first material in an acid or base,

### Definitions

As used herein, the term D₉₀ is defined as the diameter of the particles, wherein the portion of particles with diameters smaller than or equal to this value is 90 % with respect to the total number of particles. In the sense of the present disclosure, all particle diameters are determined by transmission electron microscopy (TEM) or light diffraction methods such as dynamic light scattering (DLS), for example using a Malvern Mastersizer 2000 with software version 5.12G (obtained from Malvern Pananalytical Ltd., Malvern, United Kingdom), wherein the sample is dispersed in an aqueous solution of Na₄P₂O₇.

As used herein, the term "dispersion" refers to a material comprising more than one phase wherein at least one of the phases consists of finely divided phase domains, often in the colloidal size range, dispersed throughout a continuous phase. For example, a dispersion according to the present invention comprises solid particles with D₉₀ smaller than 1 mm which are distributed in a liquid dispersion medium, such as water.

Where the term "comprising" is used in the present disclosure and claims, it does not exclude other elements. For the purposes of the present invention, the term "consisting of" is considered to be a preferred embodiment of the term "comprising of". If herein a group is defined to comprise at least a certain number of embodiments, this is also to be understood to disclose a group, which preferably consists only of these embodiments.

As used herein, the term "optionally substituted" refers to a group that is either unsubstituted or substituted, e.g., with 1, 2, 3, 4 or 5 substituents. Preferred substituents are halogens, e.g., F, CI, Br, I, primary alcohols, secondary alcohols, tertiary alcohols, aldehydes, ketones, ethers, esters, carboxylic acids, carbamates, hydroxamate, primary amines, secondary amines, tertiary amines, quaternary amines, imines, nitriles, azides, amides, hydroxylamines, N-oxides, hydrazines, hydrazones, nitrites, nitrates, primary thiols, secondary thiols, tertiary thiols, thioaldehydes, thioketones, thioethers, thioesters, sulfides, sulfites, sulfates, sulfoxides, sulfones, sulfonates, sulfoxylates, sulfonates, silanes, carbosilanes, silanoles, siloxanes, silylenes, phosphoryls, phosphates, phosphonates, phosphites, phosphines, phosphinates, primary alkyl halides, secondary alkyl halides, tertiary alkyl halides, and the like, preferably primary amines, secondary amines, tertiary amines, amides, imides, primary alcohols, secondary alcohols, tertiary alcohols, ethers, aldehyde, ketone, carboxylic acids, thiols, thioethers, hydroxamates, xanthates, carbamates, and the like.

As used herein, the term "C₁-Cₓ-alkyl" refers to linear or branched hydrocarbons having from 1 to X carbon atoms. In general, the integer following on the letter "C" given in subscript indicates the number of carbon atoms in a radical. Preferred embodiments as used herein include C₁-C₃₈-alkyl, C₁-C₂₀-alkyl, For example, the term "C₁-C₆ alkyl refers to a linear or branched hydrocarbon having 1 to 6 carbon atoms. Preferred embodiments include C₁-C₃₈-alkyl and C₁-C₂₀-alkyl. It is understood, however, that neither a C₁ nor a C₂ alkyl can be branched.

As used herein, the term "alkyl-substituted" refers to a group that is substituted, e.g., with 1, 2, 3, 4, or 5 independently selected C₁-C₂₀-alkyl or C₁-C₂₀ heteroalkyl groups, as further defined herein.

As used herein, the term "C₁-C₃₀-heteroalkyl" refers to linear or branched hydrocarbons having 1 to 10 carbon atoms and at least one heteroatom selected from the group consisting of nitrogen, oxygen, phosphorus, silicon, and halogens. As used herein, the term "C₁-C₁₀-heteroalkyl" refers to linear or branched hydrocarbons having 1 to 10 carbon atoms and at least one heteroatom selected from the group consisting of nitrogen, oxygen, phosphorus, silicon, and halogens. Under the provision that the at least one heteroatom is not a halogen, the at least one heteroatom Het may be either the point of attachment, such as in -Het-CH₂-CH₃ for a C₂-heteroalkyl, part of the chain, such as in -CH₂-Het-CH₂-, or the heteroatom may be terminal, such as in -CH₂-CH₂-Het, wherein "Het" denotes the heteroatom. In case the heteroatom is terminal, the free valences may be occupied by hydrogen or an alkyl group. In other words, a C₁-C₁₀-heteroalkyl contains at least one functional group, wherein the functional group is selected from the group consisting of oxygen-containing functional groups, nitrogen-containing functional groups, sulfur-containing functional groups, phosphorous-containing functional groups, and silicon-containing functional groups.

As used herein, the term "C₂-C₃₈-alkenyl" refers to linear or branched hydrocarbons having 2 to 38 carbon atoms and at least one C-C double bond. Examples of alkenyl which are particularly preferred according to the invention are ethenyl (vinyl), propenyl, in particular n-propenyl, isopropenyl, butenyl, n-butenyl, isobutenyl, tert-butenyl, pentenyl, in particular n-pentenyl, isopentenyl, tert-pentenyl, hexenyl, in particular n-hexenyl, isohexenyl, tert-hexenyl, heptenyl, in particular n-heptenyl, isoheptenyl, tert-heptenyl, octenyl, in particular n-octenyl, isooctenyl, tert-octenyl, nonenyl, in particular n-nonenyl, isononenyl, tert-nonenyl, decenyl, in particular n-decenyl, isodecenyl, tert-decenyl, undecenyl, in particular n-undecenyl, isoundecenyl, tert-undecenyl, or dodecenyl, in particular n-dodecenyl, isododecenyl or tert-dodecenyl.

As used herein, the term "C₂-C₃₈-alkinyl" refers to linear or branched hydrocarbons having 2 to 38 carbon atoms and at least one C-C triple bond. Examples of alkinyl which are particularly preferred according to the invention are ethinyl, n-propinyl, butinyl, n-butinyl, pentinyl, in particular n-pentinyl, hexinyl, in particular n-hexinyl, heptinyl, in particular n-heptinyl, octinyl, in particular n-octinyl, noninyl, in particular n-noninyl, decinyl, in particular n-decinyl, undecinyl, in particular n-undecinyl, or dodecinyl, in particular n-dodecinyl.

As used herein, the term "5-membered to 14-membered aryl" refers to aromatic cyclic rings of 5 to 14 ring members, including mono, bi-, and tri-cyclic ring systems. The ring members may be carbon or heteroatom, such as nitrogen or oxygen. Non-limiting examples of 5-membered to 14-membered aryl include but are not limited to -indenyl, -phenyl, -naphthyl-, -anthracenyl, - pyridinyl, -pyrimidinyl, -pyrazyl, -imidazolyl, benzimidazolyl, -furanyl, and the like.

As used herein, the term "oxygen-containing functional group" refers to a functional group containing at least one oxygen atom. Examples of oxygen-containing functional groups include, but are not limited to, primary alcohols, secondary alcohols, tertiary alcohols, aldehydes, ketones, ethers, esters, amides, carboxylic acids, carbamates, xanthates, and hydroxamates.

As used herein, the term "nitrogen-containing functional group" refers to a functional group containing at least one nitrogen atom. Examples of nitrogen-containing functional groups include, but are not limited to, primary amines, secondary amines, tertiary amines, quaternary amines, imines, nitriles, azides, amides, hydroxylamines, N-oxides, hydrazines, hydrazones, nitrites, nitrates, carbamates and hydroxamates.

As used herein, the term "sulfur-containing functional group" refers to a functional group containing at least one sulfur atom. Examples of sulfur-containing functional groups include, but are not limited to, primary thiols, secondary thiols, tertiary thiols, thioaldehydes, thioketones, thioethers, thioesters, xanthates, sulfides, sulfites, sulfates, sulfoxides, sulfones, sulfonates, sulfoxylates, sulfonates, and sulfonamides.

As used herein, the term "silicon-containing functional group" refers to a functional group containing at least one silicon atom. Examples of silicon-containing functional groups include, but are not limited to, silanes, carbosilanes, silanoles, siloxanes, and silylenes.

As used herein, the term "phosphorous-containing functional group" refers to a functional group containing at least one silicon atom. Examples of silicon-containing functional groups include, but are not limited to, phosphoryls, phosphates, phosphonates, phosphites, phosphines, and phosphinates.

Generally, it is understood that the same functional group may comprise more than one heteroatom, wherein the heteroatoms may be different. Therefore, one functional group may be classified into more than one of the classes of functional groups discussed herein. For example, an amide may be assigned to the classes of nitrogen-containing functional group and oxygen-containing functional group.

As used herein, the term "heterocyclic group" refers to a 3 to 6-membered monocyclic ring which is either saturated or unsaturated, and non-aromatic, wherein at least one member of the ring is a heteroatom. The heteroatom in the heterocyclic group may be selected from O, S, P, and N, wherein the nitrogen may be quaternized and the S may also be present in form of S(O) or S(O)₂.

As used herein, the term "C₆-C₃₀-aryl" refers to aromatic carbocyclic rings of 6 to 30 ring members, including both mono, bi-, and tri-cyclic ring systems. Non-limiting examples of C₆-C₃₀-aryl include -indenyl, - phenyl, -naphthyl-, acenaphthyl- antranyl, -phenanthryl and the like.

As used herein, the term "C₆-C₃₀-cycloalkyl" refers to mono-, bi- or tricyclic saturated hydrocarbons having from 6 to 30 carbon atoms. Representative C₆-C₃₀-cycloalkyl include cyclohexyl, cecloheptyl, cyclooctyl, cyclononyl, cyclodecyl, cycloundecyl and cyclododecyl.

As used herein, the term "C₆-C₃₀ heterocycloalkyl" refers to a 6 to 30-membered mono-, bi- or tricyclic heterocyclic ring which is either saturated, unsaturated, non-aromatic or aromatic. The heteroatom in the heterocycloalkyl may be selected from O, S, P and N, wherein the nitrogen may be quartarnized and the S may also be present in form of S(O) or S(O)₂.

As used herein, the term "C₆-C₃₀-aralkyl" refers to aromatic mono-, bi or tricyclic rings that are substituted with 1, 2, 3, 4 or 5 alkyl groups. Examples of C₆-C₃₀-arylalkyl include tolyl, xylyl, propylbenzyl and hexylbenzyl.

As used herein, the term "rare earth metal" refers to one of a set of seventeen chemical elements in the periodic table, namely the fifteen lanthanides plus scandium and yttrium.

As used herein, the term "semimetal" refers to semimetals or "metalloids" in general which are known to the skilled artisan. The term "semimetal" includes, but is not limited to, boron, silicon, germanium, arsenic, antimony, tellurium, carbon, aluminum, selenium, polonium and astatine. Preferably, the semimetal is selected from the group consisting of boron, silicon, germanium, arsenic, antimony, and tellurium.

Heteroatoms which may be present according to the invention are selected from among N, O, P, S, Si and halogens such as F, CI, Br and I.

As used herein, the term "surface-modifying substance" refers to a compound that lowers the surface tension (or interfacial tension) between two liquids or between a liquid and a solid. In other words, "surface-modifying substances" lower the contact angle between the surface of a first liquid and the surface of a second liquid or solid against air. Surface-modifying substances include, but are not limited to, anionic surfactants, nonionic surfactants, cationic surfactants, or amphoteric (zwitterionic) surfactants. The terms "surface-modifying agent", "surface active agent" and "surfactant" are used interchangeably in the context of the present invention.

As used herein, the term "magnetic" as used for example in "magnetic particles" or "magnetic core" includes, but is not limited to, ferromagnetism and ferrimagnetism.

As used herein, the term "valuable matter" refers to any material that may be of commercial value. Examples of valuable matter include, but are not limited to, elemental metals such as Ag, Au, Pt, Pd, Rh, Ru, Ir, Os, Cu, Mo, Ni, Mn, Zn, Pb, Te, Sn, Hg, Re, V, Fe or mixtures thereof. In a preferred embodiment, the valuable matter includes platinum group metals, Au, Ag, Cu, rare earth metals and the like. A "valuable matter containing material" refers a material that contains such a valuable matter in any form, such as in ore minerals, metals in pure form, alloys or mixtures thereof. For example, a valuable matter containing material may be an ore mineral comprising the valuable matter Pt.

As used herein, the term "rare earth metal" refers to one of a set of seventeen chemical elements in the periodic table, namely the fifteen lanthanides plus scandium and yttrium.

As used herein, the term "ore" refers to a type of rock that contains valuable matter such as valuable metal that can be extracted from the rock. The ores may be extracted through mining. The ore may contain a desired material, such as an ore mineral, and also an undesired second material such as gangue.

As used herein, the term "mineral" or "ore mineral" refers to a naturally occurring substance that is solid inorganic and representable by a chemical formula, which is usually abiogenic and may have an ordered atomic structure. An ore mineral may carry a valuable matter. The ore mineral is different from a rock, which can be an aggregate of minerals and/or non-minerals. Examples of minerals include, but are not limited to, sulfides, oxides, halides, carbonates, sulfates, and phosphates of valuable metals.

As used herein, the term "slag", "artificially prepared slag", "metallurgical slag", "furnace slag" or "smelter slag" refer to the by-product of a smelting process.

The main use of a smelting process is to convert an ore, scrap or a material mixture containing different metals into a form from which the desired metals can be skimmed as a metal layer and the undesired metal oxides, e.g., silicates, alumina, etc., remain as the slag. During smelting, a silicate-rich liquid phase may separate from the heavier metal melt. The latter is flowing through dedicated openings in the melting vessel and is further processed. The phase separation is however not complete, but a fraction of the desired metal becomes trapped in the liquid slag phase and remains dispersed there after solidification resulting in a so-called "mixing layer".

In general, one can distinguish between oxidative and reductive smelter operation. The slag material that can be separated according to the present invention can either be obtained under reductive conditions or can be obtained under oxidative conditions. For example, slag produced in PGM recovery operations, for example in Pt mines or old catalyst reprocessing etc., is usually formed under reducing conditions, which are exemplarily explained in the following. The energy needed to heat the mass to beyond the melting point is in general provided by an external heating, e.g., gas burners, or an electric arc. Often, carbon or other reducing materials are added. The goal is to reduce noble metal compounds to metal state. Reduced metals and the oxidic phase are immiscible and demix. Slags produced under reductive conditions often contain residual PGMs as free metals or alloys with other transition metals, particularly iron. These alloys are often ferromagnetic and can be separated from the slag matrix by a magnetic field after liberation. The losses of PGM into slag are almost exclusively due to incomplete demixing of the liquid metal and liquid slag phases - no significant formation of PGM solid solution in the slag occurs.

In a smelter that is operated under reductive conditions, the most base metal sulphides remain as sulphides. Some metal species, e.g., PGMs, may also remain as the native metal or tend to migrate into the magnetic fraction. Magnetite is often fed into the smelter to support the formation of the slag. Platinum and also rhodium preferably feature this behaviour to migrate to the magnetic fraction thus after the smelting process these precious group metals are hidden in the magnetic fraction, which is preferably in the slag, as dopants.

Is a smelter operated under oxidative conditions, the base metals sulphides and also some native metals compounds are oxidized. In this case, the magnetic separation process according to the present invention is rarely used without pre-treatment. However, if a surface treatment, for example a selective sulphidization of the desired metal of value, is preferably executed, the magnetic separation process according to the present invention can be employed as described herein. Besides the preferred sulphidization, also other surface treatments can be used to convert the desired metal species into a sulphidic, native or magnetic form. These treatments are known to the skilled artisan.

As used herein, the term "ore-bearing slag" refers to slag that comprises ores, i.e. Slag that inter alia comprises a valuable matter containing material such as an ore mineral. The ore-bearing slag may also comprise at least one second material such as gangue.

As used herein, the term "wet ore tailing" refers to a dispersion comprising ore as a "tailing", i.e., as the undesired fractions left over after the process of separating the valuable fraction from the uneconomic fraction of an ore. However, such tailings may still comprise at least one valuable matter containing material but also at least one second material.

As used herein, the term "complex oxide matrices" refers to a mixed metal oxide such as binary or higher-level oxides of the respective metals. Examples of complex oxide matrices include, but are not limited to, Ti-Si oxides, Si-Cr oxides, Si-Zr oxides and the like.

As used herein, the term "about" in respect to a measurable unit refers to normal deviations of said measurable unit. It is to be understood that the term "about" can mean a deviation of ± 15 %, preferably ± 10 %, more preferably ± 5 % of the numeric value indicated.

### Examples

### Example 1 (Preparation of copolymers)

Three different copolymers comprising monomers of maleic acid anhydride and olefins have been prepared.

Copolymer A is based on a copolymer of maleic acid anhydride and a mixture of C₂₀-C₂₄ alpha-olefins having an average molar mass of approximately 300 g/mol. The copolymerization is performed as a mixture of 19 % by weight of the monomers based on the total sum of mixtures in stoichiometric amounts in water at 150 °C at 5 bar employing di-tert.-butylperoxide as radical starter. This copolymer is then hydrolyzed with sodium hydroxide at 130 °C at 3 bar to form the corresponding sodium salt of the maleic acid units as a 25 % by weight suspension in water based on the total weight of the suspension.

Copolymer B is a mixture of the sodium salt of a maleic acid-olefin-copolymer (17 % by weight based on ), obtained from an 1 : 2 molar olefine mixture of C₂₀-C₂₄ alpha-olefins and 1-dodecene under polymerization conditions identical to those of copolymer A, with paraffines (10 % by weight based on the total weight of the suspension) and surfactants (C₁₀-oxo-alcohol-ethoxylates, C₁₆-C₁₈ ethoxylates, C₁₆-C₁₈ fatty alcohol ethoxylates) as phase compatibilizer in water to obtain a suspension containing 35 % by weight of copolymer B based on the total weight of the suspension.

Copolymer C is obtained from a copolymerization of maleic acid anhydride and a C₁₆-olefine under polymerization conditions identical to those of copolymer A. The copolymer is then hydrolized with sodium hydroxide at 100 °C to obtain a 24 % by weight suspension of the polymeric sodium salt in water based on the total weight of the suspension.

### Example 2 (Magnetite coating):

In a 400 ml beaker or jacketed vessel quipped with baffles, the coating polymer and water (if not indicated differently, deionized water is used) are mixed with a 32 mm-quad-pitchblade stirrer. The coating polymers are dispersions in water and additives as described in Example 1. The amount of polymer in the dispersion is given as % by weight based on the total weight of the copolymer suspension unless indicated otherwise.

To the aqueous suspensions of the copolymers A, B, or C, respectively, magnetite (ElectrOxide 20, obtained from Höganäs; 74 g of magnetide for 1 g of polymer) is added and stirred at 1000 rpm for 45 min at room temperature (in a beaker) or at elevated temperature (jacketed vessel). The material is then filtered and dried at 60 °C for 8 h in vacuo. The dried product is sieved passing 100 µm mesh size.

In this way, core-shell particles consisting of 1.35 % by weight of polymer based on the total weight of core-shell particle are obtained.

### Example 3 (magnetic separation of molybdenum concentrate)

Molybdenum concentrate (from a Chilean Cu/Mo mine containing 36 wt.-% of Mo, 2.1 wt.-% Cu and 2.4 wt.-% Fe each based on the total sum of mixture, wherein the main mineral phases are molybdenite, molybdenite clay, pyrophyllite, kaolinite, quartz and chalcopyrite, is washed with water and afterwards 50 g of this washed material are suspended in 150 g of drinking water in a 400 ml beaker. To this suspension 0.2 mole/kg based on the weight of the solid feed material of EDTA disodium salt dihydrate are added to mask copper ions. As a surface-modifying substance, 1.25 g of Shellsol D40 are added and the mixture is stirred with a high-performance dispersing instrument Ultra-Turrax T25 at 10,000 rpm. To this mixture, 1.5 g of coated magnetite pre-dispersed in 9 g of 0.1 % Lutensol XL80 solution in water is added and stirred for another 15 min at 1400 rpm with a 32mm-quad-pitchblade stirrer.

This slurry is finally pumped to a 2x4 wedged wire matrix of an Eriez L4 lab scale high intensity magnetic separator applying a field strength of 0.7 T. The non-magnetic material is collected in a beaker beneath the matrix. The trapped magnetic material is washed with drinking water and after changing the beaker collected separately as magnetic fraction. Both fractions are filtered and dried at 60 °C in vacuo. The concentration of molybdenum in each fraction is measured by a calibrated XRF.

| Example | Copolymer | Coating content w% | Masses Magnetite/water/coating [g] | Mo recovery magnetic fraction % | Mo grade magnetic fraction w% |
|---|---|---|---|---|---|
| 1 | A | 1.35 | 50/50/0.675 | 93 | 47 |
| 2 | B | 1.35 | 50/50/0.675 | 95 | 47 |
| 3 | C | 1.35 | 50/50/0.675 | 94 | 47 |
| | | | | | |
| Comp. Ex. 1 | Silres 610 | 1.35 | coated from toluene according to WO 2015/110555 | 84 | 46 |
| Comp. Ex. 2 | Sokalan HP 22G | 1.35 | 50/50/0.675 | 6 | 29 |
| Comp. Ex. 3 | Dehypon E127 | 1.35 | 50/50/0.675 | 6 | 28 |

As is demonstrated by the experiments, the core-shell particles according to the present invention provide for a significantly improved Mo recovery in the magnetic fraction as compared to core-shell particles wherein the shell consists of non-inventive polymers.

### Example 4 (Magnetic separation of copper ore):

100 g porphyric copper ore (from a Chilean copper mine containing 0.78 wt.-% Cu, 0.01 wt.-% Mo and 3 wt.-% Fe based on the total sum of mixture; main minerals are feldspar, quartz, pyrite and chalcopyrite) that has been first suspended in water and fed to a high intensity magnetic separator Eriez L4 equipped with a 2x4 mm wedged wire matrix at 0.3 T is suspended in 300 g of water and the pH-value of this mixture is set to 10 by addition of calcium hydroxide. As a surface-modifying substance, 200 ppm of potassium amylxanthate are added and the mixture is stirred with a 55 mm-quad-pitchblade stirrer at 600 rpm for 5 min. To this mixture, 1.5 g of coated magnetite pre-dispersed in 9 g of 0.1 % Lutensol XL80 solution in water is added and stirred for another 15 min at 800 rpm. This slurry is the pumped to the 2x4 mm wedged wire matrix of an Eriez L4 lab scale high intensity magnetic separator applying a field strength of 0.7 T. The non-magnetic material is collected in a beaker beneath the matrix. The trapped magnetic material is washed with drinking water and after changing the beaker collected separately as magnetic fraction. Both fractions are filtered and dried at 60 °C in vacuo. The concentration of copper in each fraction is measured by a calibrated XRF.

| Example | Shell copolymer | Coati ng content w% | Masses Magnetite/water/coating [g] | Cu recovery magnetic fraction % | Cu grade magnetic fraction w% |
|---|---|---|---|---|---|
| 1 | A | 1.35 | 50/50/0.675 | 58 | 6 |
| 2 | B | 1.35 | 50/50/0.675 | 61 | 4.3 |
| | | | | | |
| Comp. Ex. 1 | Silres 610 | 1.35 | coated from toluene | 57 | 4.6 |

As is demonstrated by the experiments, the core-shell particles according to the present invention provide for an improved Cu recovery in the magnetic fraction as compared to core-shell particles wherein the shell consists of non-inventive polymers.

### Example 5 (Sand stirring test)

The mechanical stability of the coating is tested by stirring 12 g of the dried coated magnetite core-shell particles according to example 2 with 388 g of quartz sand (D₈₀ = 551 µm, silicon dioxide from Supelco, Art. No. 31623) and 980 g of distilled water in a 2 I beaker equipped with baffles for 6 h at 1150 rpm (68-mm quad-pitchblade stirrer). The magnetite containing core-shell particles are tested for the separation of Mo-concentrate according to example 3.

| Example | Coati ng type | Coati ng content w% | Masses Magnetite/water/coating [g] | Mo recovery magnetic fraction % | Mo grade magnetic fraction w% |
|---|---|---|---|---|---|
| 1 | A | 1.35 | 50/50/0.675 | 95 | 46 |
| 2 | B | 1.35 | 50/50/0.675 | 95 | 46 |
| 3 | C | 1.35 | 50/50/0.675 | 97 | 46 |
| | | | | | |
| Comp. Ex. 1 | Silres 610 | 1.35 | coated from toluene | 77 | 45 |

As is demonstrated by the experiments, the core-shell particles according to the present invention provide for a significantly improved Mo recovery in the magnetic fraction after strong mechanical stress as compared to core-shell particles wherein the shell consists of non-inventive polymers. This proves a superior strength of the polymer coating in the shell of the inventive core-shell particles.

### Example 6 (Load-Unload-Load cycle)

Mo-concentrate is separated according to examples 3 and 5 (Mo recovery load I). The separated magnetic fraction is not dried but treated with 9 wt.-% Lutensol XL80 with respect to the dry mass of the magnetic fraction. The magnetic fraction is then dispersed in 583 g drinking water and stirred with the surfactant for 20 min at 1300 rpm. Afterwards the slurry is pumped to a high intensity magnetic separator Eriez L4 equipped with a 2x4 mm wedged wire matrix. The magnetic fraction contained the magnetite containing core-shell particles while the enriched Mo-concentrate was recovered as non-magnetic fraction with a high Mo-yield (unlod). The recovered magnetic fraction was re-used for a second separation experiment with freshly prepared Mo-concentrate as described in Examples 3 and 5 except that the magnetite containing core-shell particles were not pre-dispersed in surfactant (load II).

| Example | Coati ng type | Masses during preparation Magnetite/water/coating [g] | Mo recovery load I / unload / load II [%] | Mo grade load I / unload / load II [wt.-%] |
|---|---|---|---|---|
| 1 | A | 50/50/0.675 | 82/96/94 | 48/50/49 |
| 2 | B | 50/50/0.675 | 94/98/94 | 47/48/46 |
| Comp. Ex. | Silres 610 | 50/50/0.675 | 83/89/78 | 44/47/44 |

As is demonstrated by the experiments, the core-shell particles according to the present invention provide for a high Mo recovery in the non-magnetic fraction after dissociation of the Mo ore and the magnetic core-shell particles. Of note, the core-shell particles can be reused in a subsequent separation process, wherein the Mo recovery and grade are maintained or even increased. These data show that the core-shell particles according to the present invention provide for a good separation performance and stability over several separation cycles. Thus, the core-shell particles can be easily recycled and reused.

### Embodiments

1. A Core-shell particle comprising a core and a shell,
   wherein the core comprises at least one chemical element, and/or at least one compound thereof, i.e., a metal compound,
   wherein the at least one chemical element is selected from a metal and a semimetal; and wherein the shell comprises at least one copolymer of formula (I) 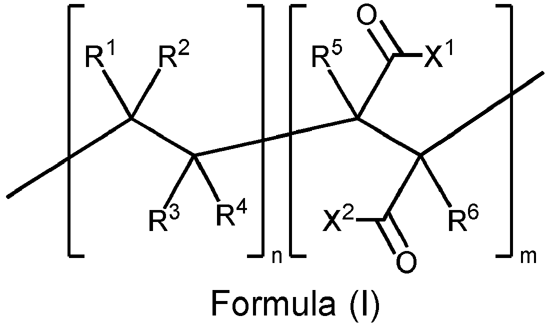 wherein R¹, R², R³, R⁴, R⁵, and R⁶ are each independently hydrogen, or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl,
   wherein the alkyl-substituted 5- to 14-membered aryl or heteroaryl are substituted with at least one substituent A each independently selected from the group consisting of a C₁-C₂₀-alkyl and a C₁-C₁₀-heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups, and wherein X¹ and X² are each independently
   i) OM, wherein M is hydrogen or an ion selected from the group consisting of NH₄⁺, Li⁺, Na⁺, K⁺, and Rb⁺ or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl, and/or
   ii) NHM, wherein M is hydrogen, or an ion selected from the group consisting of Li⁺, Na⁺, K⁺, and Rb⁺, or a radical selected from the group consisting of linear or branched, substituted or unsubstituted C₁-C₃₈-alkyl, linear or branched, substituted or unsubstituted C₂-C₃₈-alkenyl, linear or branched substituted or unsubstituted C₂-C₃₈-alkinyl, and unsubstituted or alkyl-substituted 5- to 14-membered aryl or heteroaryl, and/or
   iii) any two X¹ and X² together are linked via an oxygen atom to form a succinic anhydride ring, or via an NH to form a succinimide ring, or via an NR⁷ to form an N-substituted succinimide ring, wherein R⁷ is selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl; and
   wherein n and m are each independently integers in the range of from about 1 to about 1000,
   provided that the core does not consist of pure metallic silver.
2. The core-shell particle according to embodiment 1, wherein R⁵ and R⁶ are each independently selected from the group consisting of hydrogen, and a linear or branched, substituted or unsubstituted C₁-C₆-alkyl; preferably R⁵ and R⁶ are each independently selected from the group consisting of hydrogen, methyl, ethyl, n-propyl, iso-propyl, n-butyl, iso-butyl, tert.-butyl, n-pentyl, iso-pentyl, tert.-pentyl, n-hexyl, iso-hexyl, and tert.-hexyl; more preferably R⁵ and R⁶ are each independently selected from the group consisting of hydrogen or methyl, yet more preferably R⁵ and R⁶ are both hydrogen or methyl, most preferably R⁵ and R⁶ are both hydrogen.
3. The core-shell particle according to any one of embodiment 1 to 2, wherein R¹, R², R³, and R⁴ are each independently selected from the group consisting of hydrogen and linear or branched, substituted or unsubstituted C₁-C₃₈-alkyl; wherein preferably R¹, R², R³, and R⁴ are each independently selected from the group consisting of hydrogen, and linear or branched C₉-C₃₂-alkyl; wherein more preferably R¹, R², R³, and R⁴ are each independently selected from the group consisting of hydrogen, and linear C₁₂-C₂₈-alkyl.
4. The core-shell particle according to any one of embodiments 1 to 3, wherein at least one of R¹ or R² and at least one of R³ or R⁴ is hydrogen, and wherein the at least one remaining R¹, R², R³, and/or R⁴ is each independently selected from the group consisting of hydrogen, linear or branched, substituted or unsubstituted C₁-C₃₈-alkyl, and unsubstituted or substituted 5- to 14-membered aryl or heteroaryl, wherein the 5- to 14-membered aryl or heteroaryl is optionally substituted with a C₁-C₂₀-alkyl or C₁-C₁₀-heteroalkyl; wherein preferably the at least one remaining R¹, R², R³, and R⁴ is each independently selected from the group consisting of linear or branched C₉-C₃₂-alkyl, more preferably linear or branched C₁₂-C₂₈-alkyl.
5. The core-shell particle according to any one of embodiments 1 to 4, wherein at least one substituent A is a C₁-C₁₀ heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups.
6. The core-shell particle according to any one of embodiments 1 to 5, wherein at least one substituent A comprise at least one functional group selected from the group consisting of primary alcohols, secondary alcohols, tertiary alcohols, aldehydes, ketones, ethers, esters, carboxylic acids, carbamates, hydroxamate, primary amines, secondary amines, tertiary amines, quaternary amines, imines, nitriles, azides, amides, hydroxylamines, N-oxides, hydrazines, hydrazones, nitrites, nitrates, primary thiols, secondary thiols, tertiary thiols, thioaldehydes, thioketones, thioethers, thioesters, sulfides, sulfites, sulfates, sulfoxides, sulfones, sulfonates, sulfoxylates, sulfonates, xanthates, silanes, carbosilanes, silanoles, siloxanes, silylenes, phosphoryls, phosphates, phosphonates, phosphites, phosphines, phosphinates, primary alkyl halides, secondary alkyl halides, tertiary alkyl halides, and the like, preferably primary amines, secondary amines, tertiary amines, amides, imides, primary alcohols, secondary alcohols, tertiary alcohols, ethers, aldehyde, ketone, carboxylic acids, thiols, thioethers, hydroxamates, xanthates, and carbamates.
7. The core-shell particle according to any one of embodiments 1 to 6, wherein the shell comprises a polymer of formula (II) 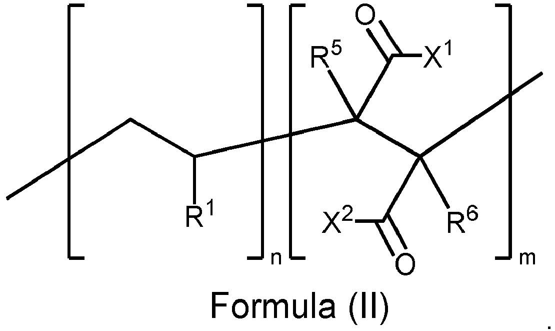
8. The core-shell particle according to embodiments 1 to 7, wherein the shell comprises a polymer of formula (III) 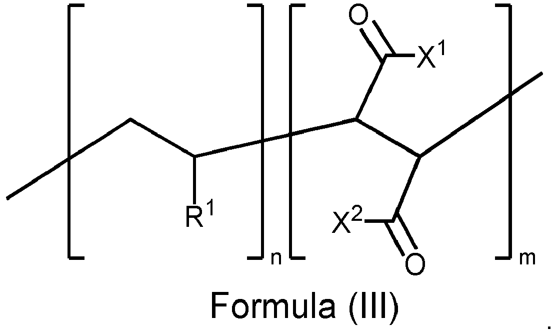
9. The core-shell particle according to any one of embodiments 1 to 8, wherein n and m are each independently integers in the range of from about 1 to about 500, preferably of from about 2 to about 250, more preferably of from about 3 to about 125, or of from about 25 to about 250, yet more preferably of from 4 to 25, most preferably of from about 4 to about 10.
10. The core-shell particle according to any one of embodiments 1 to 9, wherein the at least one copolymer of formula (I) has a number average molar mass Mₙ in the range of from about 500 g/mol to about 250,000 g/mol, preferably of from about 750 g/mol to about 200,000 g/mol, more preferably of from about 1,000 g/mol to about 150,000 g/mol, more preferably of from about 1,000 g/mol to about 100,000 g/mol, more preferably of from about 1,500 g/mol to about 50,000 g/mol, more preferably of from about 1,500 g/mol to about 25,000 g/mol, more preferably of from about 2,000 g/mol to about 10,000 g/mol, most preferably of from about 2,000 g/mol to about 5,000 g/mol.
11. The core-shell particle according to any one of embodiments 1 to 10, wherein the ratio of n/m is in the range of from about 0.1 to about 10, preferably of from about 0.2 to about 8, more preferably of from about 0.5 to about 5, yet more preferably of from about 0.75 to about 3, yet more preferably of from about 0.9 to about 1.1, most preferably the ratio of n/m is about 1. Most preferably the monomer units in the polymer are arranged in an alternating sequence.
12. The core-shell particle according to any one of embodiments 1 to 11, wherein the shell further comprises an additive selected from the group consisting of paraffines, polyolefines, polyacrylates, polystyrenes, and mixtures thereof.
13. The core-shell particle according to any one of embodiments 1 to 12, wherein the core comprises at least one metal and/or at least one compound thereof, wherein the at least one metal is selected from the group consisting of alkali metals, alkaline earth metals, metals of the third, fourth or fifth main group of the Periodic table of Elements, metals of the transition metal groups of the Periodic Table of the Elements, the lanthanides, the actinides and mixtures thereof; preferably wherein the core comprises at least one metal and/or at least one compound thereof, wherein at least one metal is selected from the group consisting of Li, Na, K, Be, Mg, Ca, Sr, Ba, Ra, Al, Ga, In, Tl, Sn, Pb, Sb, Bi, Sc, Y, Ti, Zr, Hf, Mn, Re, Fe, Ru, Os, Co, Rh, Ir, Ni, Pd, Pt, Cu, Au, Zn, and Cd, more preferably wherein the core comprises at least one metal and/or compound thereof, wherein the at least one metal and/or compound thereof is selected from the group consisting of Fe, Ni, and Co;
   and/or
   wherein the core comprises at least one semimetal and/or at least one compound thereof, wherein the at least one semimetal is preferably selected from the group consisting of B, C, and Si,
   provided that the core does not consist of pure metallic silver.
14. The core-shell particle according to any one of embodiments 1 to 13, wherein the at least one metal compound is selected from the group consisting of metal oxides, metal sulfides, metal hydroxides, metal hydrogensulfates, metal sulfates, metal hydrogencarbonates, metal carbonates, metal phosphates, metal monohydrogen phosphates, metal dihydrogenphosphates, metal halogenides, metal borides, metal nitrides, metal carbides, metal silicides, metal silicates, metal aluminates, another metal salt, and mixtures thereof, preferably metal oxides.
15. The core-shell particle according to any one of embodiments 1 to 14, wherein
   i) the core comprises at least one metal, wherein the at least one metal is selected from the group consisting of Fe, Co, Ni; and/or
   ii) the core comprises at least one metal compound, wherein the at least one metal compound is selected from the group consisting of alloys of Fe, Co, and/or Ni, manganese oxides, iron oxides; preferably magnetite; cobalt oxides, nickel oxides, copper oxides, mixtures thereof, and mixed oxides of Mn, Fe, Co, Ni, and/or Cu with at least one metal oxide of at least one alkaline earth metals, such as Mg, Ca, Sr, and Ba.
16. The core-shell particle according to any one of embodiments 1 to 15, wherein the core comprises an iron oxide, preferably Fe₂O₃, a magnetic iron oxide, preferably magnetite, maghemite, hematite, or mixtures thereof, and/or cubic ferrites of the general formula

   Z²⁺ₓFe²⁺₁₋ₓFe³⁺₂O₄

   wherein Z is selected from the group consisting of Co, Ni, Mn, Zn, Cu, Mg, Cd, Ba, Sr, and mixtures thereof, and x is smaller than or equal to 1.
17. The core-shell particle according to any one of embodiments 1 to 16, wherein the core comprises at least one alloy comprising at least one metal, at least one semimetal or a mixture thereof, preferably a silicon-iron alloy or an iron-carbon alloy, such as steel.
18. The core-shell particle according to any one of embodiments 1 to 17, wherein the core has an average diameter D₉₀ in the range of from about 50 nm to about 500 µm, preferably of from about 200 nm to about 100 µm, most preferably of from 500 nm to about 50 µm.
19. The core-shell particle according to any one of embodiments 1 to 18, wherein the shell has an average thickness of from about 0.1 nm to about 1000 nm, preferably of from about 0.5 nm to about 500 nm, more preferably of from about 0.5 nm to about 20 nm, most preferably of from about 1 nm to about 20 nm.
20. Process for the preparation of the core-shell particle according to any one of embodiments 1 to 19, wherein a core as defined in any one of the preceding embodiments is coated with the at least one copolymer as defined in any one of embodiments 1 to 12.
21. A core-shell particle obtained by the process of claim 20.
22. Use of the core-shell particle according to any one of embodiments 1 to 18 and 21 in electrostatic printing, electrophotographic development, agglomeration-deagglomeration processes, particularly chemical, physical or biological test methods, separation processes, decontamination processes, water purification, recycling of waste materials, such as electronic waste materials or battery waste materials, and in processes for separating at least one first material from a mixture comprising this at least one first material and at least one second material.
23. Process for separating at least one first material from a mixture comprising said at least one first material and at least one second material, wherein the process comprises the following steps:
   (A) contacting of the mixture comprising the at least one first material and the at least one second material with at least one surface-modifying substance, optionally in the presence of at least one dispersant,
   (B) optionally, addition of at least one dispersant to the mixture obtained in step (A),
   (C) treatment of the dispersion from step (A) or (B) with at least one core-shell particle according to any one of embodiments 1 to 19 or 21, wherein the at least one first material to which the at least one surface-modifying substance is attached and the at least one core-shell particle form an agglomerate, preferably wherein at least one metal and/or at least one compound of the at least one core-shell particle, or the mixture of at least one metal and/or at least one compound thereof and at least one semimetal and/or at least one compound thereof is magnetic, preferably ferromagnetic or ferrimagnetic, and
   (D) separation of the agglomerate formed in step (C) from the mixture by application of gravity or a magnetic field, preferably by flotation or by application of a magnetic field, more preferably by application of a magnetic field.
24. Process according to embodiment 23 wherein after process step (D), the process further comprises the following process step
   (E) cleavage of the agglomerate which has been separated off in step (D) to obtain the at least one first material and the at least one core-shell particle separately.
25. Process according to embodiment 24 wherein after cleavage according to step (E) the at least one magnetic core-shell particle is separated from the dispersion comprising said at least one magnetic core-shell particle and said at least one first material by application of a magnetic field.
26. Process according to embodiment 25, wherein after step (D) the following step (F) is conducted:
   (F) further processing of the particles of the agglomerate from step (D) via smelting, extracting and/or wet chemical refining providing the at least one first material and no step (E) is conducted.
27. Process according to embodiment 26, wherein the at least one first material obtained in step (F) is further processed by pyrometallurgy and/or hydometallurgy.
28. Process according to any one of embodiments 23 to 27, wherein in process steps (A) and/or (B) a dispersant, preferably water optionally comprising salts, is present and the dispersion comprises from about 5 % to about 40 % by weight solid content wherein the solid content is based on the total amount of solids present.
29. Process according to any one of embodiments 23 to 28, wherein after completion of process step (D), (E), or (F) at least about 70 %, preferably at least about 75 %, more preferably at least about 80 %, most preferably at least about 85 % of the core-shell particle are recovered from the process and re-introduced in step (C).

## Claims

1. A Core-shell particle comprising a core and a shell,
wherein the core comprises at least one chemical element, and/or at least one compound thereof,
wherein the at least one chemical element is selected from a metal and a semimetal; and wherein the shell comprises at least one copolymer of formula (I) 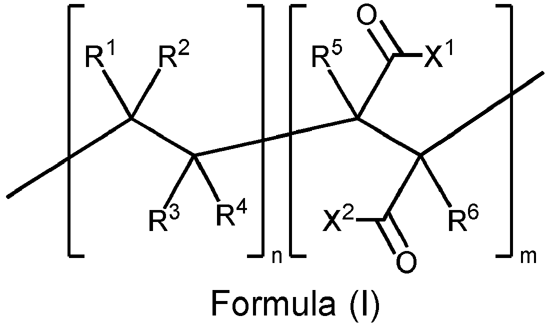 wherein R¹, R², R³, R⁴, R⁵, and R⁶ are each independently hydrogen, or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl,
wherein the alkyl-substituted 5- to 14-membered aryl or heteroaryl are substituted with at least one substituent A, each independently selected from the group consisting of C₁-C₂₀-alkyl and C₁-C₁₀-heteroalkyl, wherein the C₁-C₁₀-heteroalkyl contains at least one functional group selected from the group consisting of halogens, oxygen-containing functional groups, nitrogen-containing functional groups, sulfur-containing functional groups, phosphorous-containing functional groups, and silicon-containing functional groups, non-aromatic cyclic groups, and heterocyclic groups, and
wherein X¹ and X² are each independently
i) OM, wherein M is hydrogen or an ion selected from the group consisting of NH₄⁺, Li⁺, Na⁺, K⁺, and Rb⁺ or a radical selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl, and or
ii) NHM, wherein M is hydrogen, or an ion selected from the group consisting of Li⁺, Na⁺, K⁺, and Rb⁺, or a radical selected from the group consisting of linear or branched, substituted or unsubstituted C₁-C₃₈-alkyl, linear or branched, substituted or unsubstituted C₂-C₃₈-alkenyl, linear or branched substituted or unsubstituted C₂-C₃₈-alkinyl, and unsubstituted or alkyl-substituted 5- to 14-membered aryl or heteroaryl,
iii) and/or any two X¹ and X² together are linked via an oxygen atom to form a succinic anhydride ring, or via an NH to form a succinimide ring, or via an NR⁷ to form an N-substituted succinimide ring, wherein R⁷ is selected from the group consisting of linear or branched, substituted or unsubstituted C₁-C₃₈-alkyl, linear or branched, substituted or unsubstituted C₂-C₃₈-alkenyl, linear or branched, substituted or unsubstituted C₂-C₃₈-alkinyl, and unsubstituted or alkyl-substituted 5- to 14-membered aryl or heteroaryl; and
wherein n and m are each independently integers in the range of from about 1 to about 1000,
provided that the core does not consist of pure metallic silver.

2. The core-shell particle according to claim 1, wherein R⁵ and R⁶ are each independently selected from the group consisting of hydrogen, and a linear or branched, substituted or unsubstituted C₁-C₆-alkyl; preferably R⁵ and R⁶ are each independently selected from the group consisting of hydrogen, methyl, ethyl, n-propyl, iso-propyl, n-butyl, iso-butyl, tert.-butyl, n-pentyl, iso-pentyl, tert.-pentyl, n-hexyl, iso-hexyl, and tert.-hexyl; more preferably R⁵ and R⁶ are each independently selected from the group consisting of hydrogen or methyl, yet more preferably R⁵ and R⁶ are both hydrogen or methyl, most preferably R⁵ and R⁶ are both hydrogen.

3. The core-shell particle according to any one of claims 1 or 2, wherein R¹, R², R³, and R⁴ are each independently selected from the group consisting of hydrogen and linear or branched, substituted or unsubstituted C₁-C₃₈-alkyl; wherein preferably R¹, R², R³, and R⁴ are each independently selected from the group consisting of hydrogen, and linear or branched C₉-C₃₂-alkyl; wherein more preferably R¹, R², R³, and R⁴ are each independently selected from the group consisting of hydrogen, and linear C₁₂-C₂₈-alkyl.

4. The core-shell particle according to any one of claims 1 to 3, wherein at least one of R¹ or R² and at least one of R³ or R⁴ is hydrogen, and wherein the at least one remaining R¹, R², R³, and/or R⁴ is each independently selected from the group consisting of hydrogen, linear or branched, substituted or unsubstituted C₁-C₃₈-alkyl, and unsubstituted or substituted 5- to 14-membered aryl or heteroaryl, wherein the 5- to 14-membered aryl or heteroaryl is optionally substituted with a C₁-C₂₀-alkyl or C₁-C₁₀-heteroalkyl; wherein preferably the at least one remaining R¹, R², R³, and R⁴ is each independently selected from the group consisting of linear or branched C₉-C₃₂-alkyl, more preferably linear or branched C₁₂-C₂₈-alkyl.

5. The core-shell particle according to any one of claims 1 to 4, wherein n and m are each independently integers in the range of from about 1 to about 500, preferably of from about 2 to about 250, more preferably of from about 3 to about 125, or of from about 25 to about 250, yet more preferably of from 4 to 25, most preferably of from about 4 to about 10.,

6. The core-shell particle according to any one of claims 1 to 5, wherein the at least one copolymer of formula (I) has a number average molar mass Mₙ in the range of from about 500 g/mol to about 250,000 g/mol, preferably of from about 750 g/mol to about 200,000 g/mol, more preferably of from about 1,000 g/mol to about 150,000 g/mol, more preferably of from about 1,000 g/mol to about 100,000 g/mol, more preferably of from about 1,500 g/mol to about 50,000 g/mol, more preferably of from about 1,500 g/mol to about 25,000 g/mol, more preferably of from about 2,000 g/mol to about 10,000 g/mol, most preferably of from about 2,000 g/mol to about 5,000 g/mol.

7. The core-shell particle according to any one of claims 1 to 6, wherein the ratio of n/m is in the range of from about 0.1 to about 10, preferably of from about 0.2 to about 8, more preferably of from about 0.5 to about 5, yet more preferably of from about 0.75 to about 3, yet more preferably of from about 0.9 to about 1.1, most preferably the ratio of n/m is about 1.

8. The core-shell particle according to any one of claims 1 to 7, wherein the core comprises at least one metal and/or at least one compound thereof, wherein the at least one metal is selected from the group consisting of alkali metals, alkaline earth metals, metals of the third, fourth or fifth main group of the Periodic table of Elements, metals of the transition metal groups of the Periodic Table of the Elements, the lanthanides, the actinides and mixtures thereof; preferably wherein the core comprises at least one metal and/or at least one compound thereof, wherein at least one metal is selected from the group consisting of Li, Na, K, Be, Mg, Ca, Sr, Ba, Ra, Al, Ga, In, Tl, Sn, Pb, Sb, Bi, Sc, Y, Ti, Zr, Hf, Mn, Re, Fe, Ru, Os, Co, Rh, Ir, Ni, Pd, Pt, Cu, Au, Zn, and Cd, more preferably wherein the core comprises at least one metal and/or compound thereof, wherein the at least one metal and/or compound thereof is selected from the group consisting of Fe, Ni, and Co;
and/or
wherein the core comprises at least one semimetal and/or at least one compound thereof, wherein the at least one semimetal is preferably selected from the group consisting of B, C, and Si,
provided that the core does not consist of pure metallic silver.

9. The core-shell particle according to any one of claims 1 to 8, wherein
i) the core comprises at least one metal, wherein the at least one metal is selected from the group consisting of Fe, Co, Ni; and/or
ii) the core comprises at least one metal compound, wherein the at least one metal compound is selected from the group consisting of alloys of Fe, Co, and/or Ni, manganese oxides, iron oxides; preferably magnetite; cobalt oxides, nickel oxides, copper oxides, mixtures thereof, and mixed oxides of Mn, Fe, Co, Ni, and/or Cu with at least one metal oxide of at least one alkaline earth metals, such as Mg, Ca, Sr, and Ba.

10. The core-shell particle according to any one of claims 1 to 9, wherein the core comprises an iron oxide, preferably Fe₂O₃, a magnetic iron oxide, preferably magnetite, maghemite, hematite, or mixtures thereof, and/or cubic ferrites of the general formula
Z²⁺xFe²⁺₁₋ₓFe³⁺₂O₄
wherein Z is selected from the group consisting of Co, Ni, Mn, Zn, Cu, Mg, Cd, Ba, Sr, and mixtures thereof, and x is smaller than or equal to 1.

11. The core-shell particle according to any one of claims 1 to 10, wherein the core comprises at least one alloy comprising at least one metal, at least one semimetal or a mixture thereof, preferably a silicon-iron alloy or an iron-carbon alloy, such as steel.

12. Process for the preparation of the core-shell particle according to any one of claims 1 to 11, wherein a core as defined in any one of the preceding claims is coated with the at least one copolymer of formula (I) as defined in any one of claims 1 to 7.

13. Use of the core-shell particle according to any one of claims 1 to 11 in electrostatic printing, electrophotographic development, agglomeration-deagglomeration processes, particularly chemical, physical or biological test methods, separation processes, decontamination processes, water purification, recycling of electronic waste materials, and in processes for separating at least one first material from a mixture comprising this at least one first material and at least one second material.

14. Process for separating at least one first material from a mixture comprising said at least one first material and at least one second material, wherein the process comprises the following steps:
(A) contacting of the mixture comprising the at least one first material and the at least one second material with at least one surface-modifying substance, optionally in the presence of at least one dispersant,
(B) optionally, addition of at least one dispersant to the mixture obtained in step (A),
(C) treatment of the dispersion from step (A) or (B) with at least one core-shell particle according to any one of claims 1 to 11, wherein the at least one first material to which the at least one surface-modifying substance is attached and the at least one core-shell particle form an agglomerate, preferably wherein at least one metal and/or at least one compound of the at least one core-shell particle, or the mixture of at least one metal and/or at least one compound thereof and at least one semimetal and/or at least one compound thereof is magnetic, preferably ferromagnetic or ferrimagnetic, and
(D) separation of the agglomerate formed in step (C) from the mixture by application of gravity or a magnetic field, preferably by flotation or by application of a magnetic field, more preferably by application of a magnetic field.

15. Process according to claim 14 wherein after process step (D), the process further comprises the following process step
(E) cleavage of the agglomerate which has been separated off in step (D) to obtain the at least one first material and the at least one core-shell particle separately; or wherein after step (D) the following step (F) is conducted:
(F) further processing of the particles of the agglomerate from step (D) via smelting, extracting and/or wet chemical refining providing the at least one first material and no step (E) is conducted..
